(19) Europäisches Patentamt / European Patent Office / Office européen des brevets

(11) **EP 4 040 396 B1**

(12) **EUROPÄISCHE PATENTSCHRIFT**

(45) Veröffentlichungstag und Bekanntmachung des Hinweises auf die Patenterteilung:
**28.01.2026 Patentblatt 2026/05**

(21) Anmeldenummer: **22154149.3**

(22) Anmeldetag: **31.01.2022**

(51) Internationale Patentklassifikation (IPC):
**G06T 15/06** (2011.01)      **G02B 27/00** (2006.01)

(52) Gemeinsame Patentklassifikation (CPC):
**G02B 27/0012; G06T 15/06**

(54) **VERFAHREN ZUR SIMULATION EINER OPTISCHEN ABBILDUNG**

METHOD FOR SIMULATING AN OPTICAL IMAGE

PROCÉDÉ DE SIMULATION D'UNE IMAGE OPTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.02.2021 DE 102021200965**

(43) Veröffentlichungstag der Anmeldung:
**10.08.2022 Patentblatt 2022/32**

(73) Patentinhaber: **Carl Zeiss AG**
**73447 Oberkochen (DE)**

(72) Erfinder:
- **Körner, Martin**
  **07743 Jena (DE)**
- **Schroer, Alexander**
  **73430 Aalen (DE)**
- **Weth, Christopher**
  **73431 Aalen (DE)**

(56) Entgegenhaltungen:
**DE-A1- 102018 118 187     US-A- 6 028 606**

- EMANUEL SCHRADE ET AL: "Sparse high-degree polynomials for wide-angle lenses", COMPUTER GRAPHICS FORUM : JOURNAL OF THE EUROPEAN ASSOCIATION FOR COMPUTER GRAPHICS, WILEY-BLACKWELL, OXFORD, vol. 35, no. 4, 27 July 2016 (2016-07-27), pages 89 - 97, XP071488418, ISSN: 0167-7055, DOI: 10.1111/CGF.12952

- JOHANNES HANIKA ET AL: "Efficient Monte Carlo rendering with realistic lenses", COMPUTER GRAPHICS FORUM : JOURNAL OF THE EUROPEAN ASSOCIATION FOR COMPUTER GRAPHICS, vol. 33, no. 2, May 2014 (2014-05-01), Oxford, pages 323 - 332, XP055411847, ISSN: 0167-7055, DOI: 10.1111/cgf.12301

- QUAN ZHENG ET AL: "Adaptive sparse polynomial regression for camera lens simulation", VISUAL COMPUTER, SPRINGER, BERLIN, DE, vol. 33, no. 6, 9 May 2017 (2017-05-09), pages 715 - 724, XP036248695, ISSN: 0178-2789, [retrieved on 20170509], DOI: 10.1007/S00371-017-1402-9

- HAEBERLI PAUL ET AL: "The accumulation buffer: hardware support for high-quality rendering", PROCEEDINGS OF THE 3RD INTERNATIONAL CONFERENCE ON INDUSTRIAL AND ENGINEERING APPLICATIONS OF ARTIFICIAL INTELLIGENCE AND EXPERT SYSTEMS - VOLUME 2, ACMPUB27, NEW YORK, NY, USA, September 1990 (1990-09-01), pages 309 - 318, XP058610304, ISBN: 978-1-4503-8946-4, DOI: 10.1145/97879.97913

- XUAN YU ET AL: "Real-time Depth of Field Rendering via Dynamic Light Field Generation and Filtering", COMPUTER GRAPHICS FORUM : JOURNAL OF THE EUROPEAN ASSOCIATION FOR COMPUTER GRAPHICS, WILEY-BLACKWELL, OXFORD, vol. 29, no. 7, 18 October 2010 (2010-10-18), pages 2099 - 2107, XP071488015, ISSN: 0167-7055, DOI: 10.1111/J.1467-8659.2010.01797.X

EP 4 040 396 B1

**Beschreibung**

Die Erfindung betrifft Verfahren zur Erzeugung eines Bildes und ein Computerprogrammprodukt.

Zur fotografischen Aufnahme von Bildern, insbesondere auch der Aufnahme von Bildsequenzen, werden Bildaufnahmesysteme verwendet, die ein Kameramodul und ein Objektiv enthalten. Das Kameramodul beinhaltet einen Bildaufnehmer, der ein elektronischer Bildaufnahmesensor oder ein lichtempfindlicher chemischer Film sein kein. Das Objektiv beinhaltet üblicherweise eine Vielzahl optischer Elemente wie optische Linsen, Blenden und/oder Spiegel. Häufig enthalten solche Objektive eine in der Größe veränderliche Blende, die sogenannte Aperturblende. Die optische Abbildung kommt dadurch zustande, dass Licht vom abzubildenden Objekt durch diese Elemente auf den Bildaufnahmesensor oder das Filmmaterial fällt. Eine solche optische Abbildung ist zumeist mit optischen Abbildungsfehlern behaftet, wie beispielsweise Defokus, Koma, sphärische Aberration, geometrische Verzeichnung oder radiale Helligkeitsabfälle durch sogenannte Vignettierung. Diese sogenannten geometrischen Abbildungsfehler sind häufig abhängig von der Fokusstellung, von der eingestellten Aperturblende des Objektivs und/oder von anderen Parametern, wie beispielsweise die Brennweite des Objektivs. In ihrer Gesamtheit bewirken die Abbildungsfehler für jedes gegebene Objektiv aufgrund seines spezifischen optischen Objektivdesigns ein charakteristisches geometrisches Abbildungsverhalten. Der Effekt ist besonders auffällig bei der Abbildung von Objektmerkmalen, welche nicht im Fokus liegen, denn solche Objektmerkmale werden unscharf wiedergegeben, und zwar mit einer umso größeren Unschärfe, je weiter ein solches Objektmerkmal von der ideal fokussierten Fläche entfernt ist und mit einer umso größeren Unschärfe je größer die Aperturblende des Objektivs eingestellt ist.

Die Charakteristik, mit der solche defokussierten Objektpunkte abgebildet werden, wird üblicherweise Bokeh genannt. Beispielsweise sind Objektive bekannt, bei denen defokussierte Objektpunkte, die deutlich außerhalb der optischen Achse liegen, auf in die Breite gezogene und leicht gekrümmte Unschärfebereiche abgebildet werden. Dies kann beispielsweise auf Objektive vom sogenannten Biotar-Typ zutreffen, wie sie beispielsweise in US 1,786,916 beschrieben werden.

Eine vollkommen andere Charakteristik weisen beispielsweise Objektive vom Spiegellinsentyp auf, von denen eines exemplarisch in DD 263604 A1 beschrieben ist. Derartige Objektive bilden defokussierte Objektpunkte üblicherweise auf ringförmige Unschärfebereiche ab. Das Bokeh zeigt bei Abbildung mit solchen Objektiven insbesondere bei Objekten mit ausgeprägten Spitzlichtern häufig ein ausgeprägt unruhiges Ringmuster.

Bei der Produktion von Kinofilmen oder ähnlichem werden häufig bewegt-fotografische Aufnahmen mit virtuellen Bildern und/oder virtuellen Bildsequenzen gemischt. Dieses Verfahren wird häufig Rendering genannt. Das Ergebnis solch eines Renderings ist ein digital erzeugtes Bild oder eine digital erzeugte Bildsequenz. Solch ein Bild oder solch eine Bildsequenz wird durch Berechnung aus einem mathematischen Modell der darzustellenden Szene erzeugt. Solch ein Modell der Szene enthält unter anderem Informationen über Eigenschaften, wie beispielsweise Form, Farbe und optische Oberflächenbeschaffenheiten der zu modellierenden Objekte in der zu modellierenden Szene. Dieses Modell der Szene wird mit einem mathematischen Modell der Beleuchtung beaufschlagt, welches unter anderem aus dem Ort, der Art, der Farbe und der Richtung der einzelnen zu modellierenden Lichtquellen besteht. Zur eigentlichen Berechnung des Bildes wird mindestens die Position in der Szene, die Aufnahmerichtung und das Sehfeld einer virtuellen Kamera benötigt. Die rechnerische Erzeugung des Bildes oder der Bildsequenz der modellierten Szene mit der virtuellen Kamera und Teilschritte der rechnerischen Erzeugung wird hier als Simulation bezeichnet. Häufig wird für diese Berechnung ein einfaches Lochkameraprinzip (Camera obscura) eingesetzt, welchem eine simple geometrische Projektion gemäß dem mathematischen Prinzip des Strahlensatzes zugrunde liegt. Obgleich sehr einfach stellt dies die Grundlage einer Simulation einer idealtypischen fotografischen Abbildung dar da hier keine geometrischen Bildfehler auftreten.

Das Vorgehen, gerenderte Sequenzen virtueller Bilder mit real aufgenommenen Bildsequenzen zu mischen, stellt eine übliche Vorgehensweise dar im Bereich der Echtzeit-3D-Computergrafik und der visuellen Effekte in der Cinematografie. Die so erzeugten Effekte werden als VFX (von visual effects) bezeichnet. Die Mischung der realen Bilder mit den virtuellen Bildern ist auch als Augmentierung bekannt. Augmentierung ist häufig ein Teil des sogenannten Compositings, eines Schrittes in der Nachbearbeitung oder Postproduktion eines cinematografischen Filmes, bei dem Bilder unterschiedlicher Quellen zusammengeführt werden. Insbesondere bei der Mischung von fotografisch gewonnenen Bildern oder Bildsequenzen realer Szenen mit virtuell erzeugten Inhalten ist es wünschenswert, dass diese virtuell erzeugten Inhalte in einem finalen Bild oder Bildsequenz keine oder nur schwach erkennbaren Unterschiede zu fotografisch gewonnenen Bildern oder Bildsequenzen realer Szenen aufweisen und damit einen möglichst fotorealistischen Eindruck vermitteln. Dies wird dadurch erreicht, dass die digital erzeugten Inhalte mit Randbedingungen erzeugt werden, welche den Randbedingungen realer Bildaufnahmen möglichst nahekommen. Eine korrekte Simulation der realen Abbildungskette beinhaltet einerseits die Randbedingungen zur mathematischen Beschreibung der Szene und der Beleuchtung, andererseits aber auch die Randbedingungen zur Aufnahme, also insbesondere der optischen Abbildung auf den Bildaufnehmer oder Sensor. Diese werden durch ein einfaches geometrisches Kameramodell, also eine Simulation einer Lochkamera, nicht gegeben.

Ein weiterer wichtiger Anwendungsfall für gerenderte Bilder oder gerenderte Bildsequenzen sind vollständig animierte Bilder oder Bildsequenzen, also solche bei denen der volle Informationsgehalt aus einer virtuellen Szene stammt und keine Mischung mit einem realen Bild oder mit realen Bildsequenzen vorgenommen wird. Dies beinhaltet den Bereich der Animationsfilmherstellung und den Bereich der virtuellen Realität, welcher beispielsweise im Bereich der Computerspiele, aber beispielsweise auch im Bereich der Trainingssimulatoren, wie Flugzeugsimulatoren für das Pilotentraining oder Zugsimulatoren für das Lokführertraining zur Anwendung kommt. Speziell im Bereich der Animationsfilme und der Computerspiele ist es wünschenswert einen bestimmten, fotorealistischen, Eindruck der Szene zu erzeugen. Weiter kann dieses Verfahren beispielweise im Bereich der medizinischen Bildgebung zur Mischung von realen medizinischen Bildaufnahmen mit Computergenerierten Abbildungen angewendet werden.

Üblicherweise werden gerenderte Bilder mit Techniken wie Ray-Tracing, erzeugt. Bei Ray-Tracing werden die optischen Strahlverläufe von den Lichtquellen zum Objekt und vom Objekt bis auf den Bildaufnehmer berechnet. Dieser Berechnungsschritt wird in der Praxis häufig so durchgeführt, dass die Strahlen rückwärts vom Bildaufnehmer zum Objekt durchgerechnet werden, also in entgegengesetzter Richtung zur Propagation der physikalischen Strahlen im optischen Gerät selbst. Selbstverständlich ist eine Durchrechnung entlang der Lichtrichtung äquivalent und ebenso möglich.

Häufig wird zur Simulation der optischen Abbildung auf den Bildaufnehmer bei solchen Ray-Tracing-Berechnungen das erwähnte einfache Lochkamera-Modell verwendet. Einer der Vorteile besteht dabei darin, dass sogenannte ideale Bilder entstehen, die keine geometrischen Abbildungsfehler enthalten. Bei diesem Modell werden in der Simulation alle Strahlen der Ray-Tracing-Berechnung durch einen dem simulierten Bildaufnehmer vorgelagerten Punkt gerechnet, dessen Abstand vom Bildaufnehmer gerade so groß gewählt wird, dass das geometrisch erreichte Sehfeld dem Sehfeld des zu simulierenden Kamerasystem entspricht. Dieser Punkt der Simulation korrespondiert zu dem Mittelpunkt eines sehr kleinen Lochs einer realen Lochkamera. Der Vorteil der Simulation einer Lochkamera liegt neben der Einfachheit des mathematischen Modells in der hohen Geschwindigkeit mit der solche Rechnungen durchgeführt werden können. Insbesondere können spezielle Grafikprozessoren oder Graphical Processing Units (GPUs) derartige Abbildungssimulationen besonders schnell und für viele Bildpunkte parallelisiert durchführen. Diese Parallelisierung bringt einen großen Geschwindigkeitsgewinn, bis hin zur Berechnung gesamter komplexer virtueller Szenen in Echtzeit.

Dabei werden jedoch prinzipbedingt die oben beschriebenen, bei einer realen Aufnahme mit einer realen Kamera mit einem realen Objektiv auftretenden Bildfehler oder Bildcharakteristika nicht berücksichtigt und der entstehende Bildeindruck der Simulation bleibt oftmals weit von dem Eindruck entfernt, der bei Betrachtung von vergleichbaren real erzeugten Bilder entstehen würde. Dies kann besonders dann problematisch sein, wenn gerenderte Bildinhalte und real aufgenommene Bilder oder Bildsequenzen gemischt werden sollen. Um dies zu kompensieren werden häufig Mittel der zweidimensionalen Bildverarbeitung und künstlerische Mittel eingesetzt. Beispielsweise werden nachträglich Unschärfen in das oder in die durch Simulation einer Lochkamera gewonnenen idealen Bilder eingerechnet, die den von der realen Kamera erzeugten Unschärfen möglichst nahekommen sollen. Die Korrektur oder das Einbringen von geometrischen Verzeichnungen und Helligkeitsabfall in Form von Vignettierungen ist ein weiterer Effekt, der einfach eingerechnet werden kann. Derartige Korrekturen werden in der Regel phänomenologisch so angepasst, dass der Bildeindruck der durch Simulation gewonnenen Bilder dem von durch reale Aufnahmen gewonnenen Bildern möglichst nahekommt.

Es ist daher wünschenswert, die Eigenschaften eines zur Aufnahme realer Bilder verwendeten realen Aufnahmeobjektivs in der Simulation mit möglichst vielen seiner Eigenschaften nachzubilden. Zum einen um möglichst exakte Übereinstimmung der Charakteristika wie Bokeh zu erhalten, zum anderen um mit einem geradlinigen Prozess arbeiten zu können, der kein empirisches Ausprobieren von Parametern, oder gar künstlerisches Zutun erfordert, sondern deterministisch nachvollziehbar und damit voraussehbar ist. Selbstverständlich ist es grundsätzlich möglich, die Technik des Ray-Tracing auch auf den gesamten optischen Teil des Bildaufnahmesystems anzuwenden. Tatsächlich findet derartiges Ray-Tracing in der Auslegung und Optimierung optischer Systeme bereits seit vielen Jahren breite Anwendung. Die Verwendung im VFX-Bereich oder der 3D-Computergrafik ist jedoch unüblich, da diese Techniken sehr viele Rechenoperationen beinhalten und daher sehr ressourcen- und zeitintensiv und damit teuer sind. Die erwähnten, üblicherweise zum Rendering verwendeten GPUs sind nicht für solche komplexen Abbildungssimulationen ausgelegt.

Der wesentliche Rechenaufwand bei einer Ray-Tracing-Simulation durch ein realistisches Modell eines zu simulierenden Objektivs entsteht dadurch, dass eine Vielzahl von Strahlablenkungen im Inneren des zu simulierenden Objektivs nach dem Brechungsgesetz der geometrischen Optik berechnet werden müssen. Solche Ablenkungen kommen an jeder Grenzfläche zwischen optischem Material und Luft und auch an jeder Grenzfläche zwischen unterschiedlichen optischen Materialien, beispielsweise bei sogenannten Kittgliedern vor. Derartige Strahldurchrechnungen müssen für jeden Bildpunkt vielfach mit unterschiedlichen Auftreffwinkeln auf den Bildaufnehmer durchgerechnet werden, so dass der durchlässige Bereich der Aperturblende des zu simulierenden Objektivs gut abgerastert wird. Zur Erzeugung qualitativ hochwertiger Bilder können dabei circa 1000 oder mehr zu rechnende Strahlen pro Bildpunkt notwendig sein. Bei Ray-Tracing müssen üblicherweise zudem derartige Rechnungen für unterschiedliche Wellenlängen des Lichtes durchgeführt werden, da die optischen Materialien aufgrund von Dispersionseigenschaften wellenlängenabhängige Brechungsindices und damit wellenlängenabhängige Strahlabweichungen aufweisen. Dazu kommt Strahlabsorption innerhalb des Objektivs, sogenannte Abschattung, beispielsweise an der Aperturblende, aber beispielsweise auch an Linsenfassungen. Diese Strahlabsorptionen müssen von der Simulation ebenfalls erfasst werden, den sie tragen wesentlich zu Bokeh und Vignettierung eines Objektivs bei.

Strahldurchrechnungen müssen mehrfach für jedes Pixel des Bildsensors derart durchgeführt werden, dass die auf jedes Sensorpixel einfallenden Lichtstrahlen die Austrittpupille des zu simulierenden Objektivs als ausreichend dichtes Bündel durchdringen. Nur dadurch lassen sich die durch geometrische Effekte bewirkten Abbildungseigenschaften eines zu simulierenden Objektivs realistisch simulieren.

Neben dem hohen Rechenaufwand ist insbesondere im Bereich VFX ein Nachteil der Raytracing-Simulation des Objektivs, dass hierfür genaue Kenntnis des optischen Aufbaus des zu simulierenden Objektivs benötigt wird. Dies umfasst beispielsweise Größen wie Linsenmaterialien, Linsenradien, Krümmungsradien, Asphärenparameter und/oder Abstände zwischen optischen Elementen des Objektivs, insbesondere wenn diese Abstände veränderlich sind. Dies bedeutet, dass ein Anwender oder Nutzer der Ray-Tracing-Methode Kenntnis all dieser Parameter benötigt. Umgekehrt ist ohne Kenntnis dieser Parameter eine Simulation der Abbildung eines Objektivs mit Ray-Tracing unmöglich. Um Details über den Aufbau des zu simulierenden Objektivs nicht weitergeben zu müssen, ist es wünschenswert eine Möglichkeit zu haben, realistische Simulationen der Abbildung eines zu simulierenden Objektivs durch Dritte durchführen lassen zu können, ohne dass Details über den Aufbau dafür überhaupt benötigt würden.

Ein bekanntes Verfahren zur Senkung des Rechenaufwandes ist das von Schrade et al. in E. Schrade, J. Hanika, C. Dachsbacher, Sparse high-degree polynomials for wide-angle lenses, Eurographics Symposium on Rendering 2016, Vol. 35, No. 4 beschriebene Verfahren. Dabei wird ein abstraktes Linsenmodell verwendet, bei dem die Koeffizienten mehrerer Polynome einer Transformationsvorschrift so gewählt werden, dass bei Eingabe des Ortes und der Richtung eines in das zu simulierende Objektiv einfallenden Strahles, näherungsweise der Ort und die Richtung des korrespondierenden, aus dem zu simulierenden Objektiv ausfallenden Strahles ausgegeben wird. Solch ein Objektivmodell oder simuliertes Objektiv ist insofern abstrakt als es keine Informationen über den physikalischen Aufbau des modellierten oder zu simulierenden Objektivs enthält, weshalb auf dessen Aufbau aufgrund der Koeffizienten des Modells nicht zurückgerechnet oder rückgeschlossen werden kann. Es benötigt lediglich die Vorschrift, wie Strahlen bei Ihrer Propagation durch das Objektiv abgelenkt werden. Auf diese Art und Weise beschreiben Schrade et al. eine abstrahierte Simulation der Abbildung eines Objektivs in einem optischen Abbildungssystem.

Die Simulation der Abbildung durch das simulierte Objektiv wird durch die Anwendung der Transformationsvorschrift mit geeigneten Koeffizienten auf den simulierten Ort und die simulierte Richtung eines simulierten, Richtung Bildaufnehmer ausfallenden Lichtstrahles durchgeführt. Das Ergebnis der Simulation sind der simulierte Ort und die simulierte Richtung eines simulierten, vom Objekt her einfallenden Lichtstrahles. Das Simulationsverfahren kann ohne Einschränkung auch auf eine Strahldurchrechnung in umgekehrter Richtung angewendet werden und als Ergebnis den Ort und die Richtung eines simulierten ausfallenden Lichtstrahles liefern. Es versteht sich von selbst, dass dabei ist eine entsprechend invertierte Transformationsvorschrift zu verwenden ist.

Das Simulationsverfahren von Schrade et al. nimmt eine feste Fokusstellung und eine feste Brennweite des simulierten Objektivs an. Wird einer dieser Parameter verändert, so muss das gesamte abstrakte Objektivmodell, repräsentiert durch die Koeffizienten der verwendeten Transformationsvorschrift, neu berechnet werden. Dieser Vorgang ist sehr rechenintensiv und daher zeitaufwändig.

Im Simulationsverfahren von Schrade et al. wird weiterhin angenommen, dass der auf das Objektiv einfallende Strahl auf die erste Linsenfläche trifft und dort die Wirkung des Objektivs auf den Strahl beginnt. Dadurch offenbart das dort beschriebene Simulationsverfahren dem Benutzer des Verfahrens Informationen über das simulierte Objektiv, nämlich die Form der Vorderfläche des simulierten Objektivs. Eine vollständige Abstrahierung des Objektivs ist somit nicht gegeben.

Bezüglich der Fokussierung des simulierten Objektivs verwendet das Verfahren von Schrade et al. die Verschiebung der Ebene des simulierten Bildaufnehmers relativ zum simulierten Objektiv. Diese Art der Fokussierung ist nur bei einfachen Objektiven realisiert, beispielsweise bei dem bereits erwähnten Biotar. Bei modernen Objektiven wird zur Fokussierung häufig eine Verschiebung einer oder mehrerer Linsen relativ zu anderen optischen Elementen des Objektivs verwendet. Dabei können Linsen zu Linsengruppen zusammengefasst sein, die als gesamte Einheit verschoben werden. Eine Lösung zur schnellen Simulation derartig komplexer Objektive ist der Lehre von Schrade et al. nicht zu entnehmen.

Ein Objektiv mit veränderlicher Brennweite, auch pankratisches Objektiv, Varioobjektiv oder Zoomobjektiv genannt, bedient sich ebenfalls optischer Linsen und Gruppen von optischen Linsen, welche relativ zu den anderen verschiebbar sind, um die Veränderung der Brennweite zu erzielen. Wenn die Lehre von Schrade et al. zur Simulation solcher Zoomobjektive genutzt werden soll, muss für jede einzelne simulierte, verschiebbare Baugruppe eine separate Transformationsvorschrift mit geeigneten Koeffizienten gegeben werden. Außerdem muss die Verschiebung der Baugruppen bekannt gegeben werden. Eine vollständige Abstrahierung der Wirkung des simulierten Objektivs ist für Zoomobjektive somit nicht gegeben. Desweiteren erlaubt eine Simulation gemäß der Lehre von Schrade et al. Rückschlüsse auf die Baugröße der Aperturblende und ihre Durchdringung von Strahlen abhängig von Position und Richtung im Bildraum, woraus sich sensitive Eigenschaften des Objektivs ableiten lassen. Weiterhin wird nicht gezeigt, wie damit umgegangen werden kann, dass Strahlen an unterschiedlichen Positionen in einem Objektiv, beispielsweise Blenden oder Fassungsteilen, abgeschattet, also absorbiert werden und daher nicht zur Bildentstehung beitragen.

Es ist daher Aufgabe der Erfindung, das im Stand der Technik gelehrte Simulationsverfahren so weiterzuentwickeln, dass der Satz von Koeffizienten, der das Objektiv beschreibt, vollständig vom Aufbau des Objektivs abstrahiert ist und daher keine Rückschlüsse auf den Aufbau des simulierten Objektivs zulässt. Ebenfalls ist es ist Aufgabe der Erfindung das im Stand der Technik gelehrte Simulationsverfahren so weiterzuentwickeln, dass es bei Veränderungen des Fokus, der Brennweite oder eines oder mehrerer kontinuierlicher Parameter des simulierten Objektivs keine rechenintensiven Neuberechnungen für die Koeffizienten der Transformationsvorschrift bedarf.

Die erste Aufgabe wird gelöst durch die Merkmale des Anspruchs 1. Die zweite Aufgabe wird gelöst durch die Merkmale des Anspruchs 2. Weitere vorteilhafte Ausführungsformen werden durch die Merkmale der abhängigen Ansprüche beschrieben. Weitere Merkmale der Erfindung ergeben sich aus der nachfolgenden Beschreibung, den nachfolgenden Ansprüchen und/oder den beigefügten Figuren.

Die Erfindung und ihre Ausführungsformen werden anhand der folgenden Figuren beschrieben:

Fig. 1 zeigt schematisch das Prinzip der Bildaufnahme.

Fig. 2 zeigt schematisch das Prinzip der erfindungsgemäßen Simulation.

Fig. 3 zeigt schematisch die Wirkung der optischen Abbildung eines Objektivs.

Fig. 4 zeigt schematisch den Aufbau des ersten Datensatzes.

Fig. 5 zeigt schematisch den Aufbau des zweiten Datensatzes.

Fig. 6 zeigt schematisch das Prinzip der Simulation eines Strahldurchlaufs.

Fig. 7 zeigt schematisch den optischen Aufbau eines beispielhaften zu simulierenden Objektivs.

Fig. 8 zeigt schematisch die Positionierung von Lochkamerabildern relativ zur Eintrittspupille.

Fig. 9 zeigt schematisch eine Anordnung von Lochkamerabildern relativ zur Eintrittspupille in Form einer Fibonacci-Spirale.

Fig. 10 zeigt schematisch eine zufällige Anordnung von Lochkamerabildern relativ zur Eintrittspupille.

Fig. 11 zeigt schematisch den beispielhaften Aufbau einer Bildsimulation anhand eines abstrakten Treppenobjekts und ein zugehöriges Lochkamerabild dieses Treppenobjekts.

Fig. 12 zeigt schematisch erfindungsgemäß simulierte Bilder eines abstrakten Treppenobjekts mit einer, wenigen und vielen dafür verwendeten Lochkamerabilder (5700, 5800, 5900), sowie Positionierung der Lochkameras relativ zur Eintrittspupille.

Beschreibung der erfindungsgemäßen Lösung

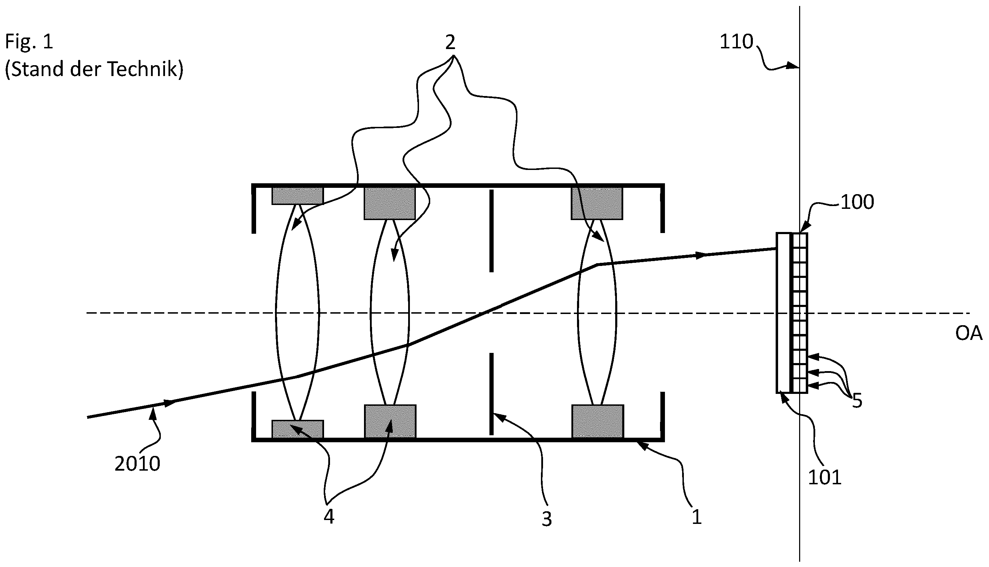

Das Prinzip der Bildaufnahme ist schematisch in Figur 1 gezeigt. Ein gegebenes, zu simulierendes Objektiv 1 zur fotografischen Bildaufnahme weist Linsen 2 und häufig eine in der Größe verstellbare Aperturblende 3 auf. Jede der Linsen hat einen bestimmten Radius und wird durch eine nicht transparente Fassung 4 gehalten. An einer vom speziellen Optikdesign des zu simulierenden Objektivs 1 abhängigen Position ist der im folgenden auch Sensor genannte Bildaufnehmer 100 angebracht. Der zu simulierende Sensor 100 kann aus einer Vielzahl von zumeist rasterförmig angeordneten Lichtdetektoren, den sogenannten Pixeln 5, bestehen. Jedes dieser Pixel nimmt bei der Aufnahme einen Bildpunkt auf. Am Ort des Sensors 100 entsteht optisch das Bild und dort findet in einem realen Kamerasystem an jedem Pixel oder Bildpunkt eine elektronische oder chemische Erfassung der jeweils auftreffenden Lichtintensität statt: die Aufnahme eines Bildpunkts. Der Sensor kann mit einem rasterförmigen Farbfilter 101, beispielsweise angeordnet in einem sogenannten Bayer-Muster ausgestattet sein, so dass jedes Pixel 5 nur eine bestimmte Farbe detektieren kann. Es ist auch möglich, dass jedes Pixel 5 beispielsweise alle drei Grundfarben beispielsweise Rot, Grün und Blau detektieren kann. In der Simulation entspricht dies der Registrierung und Speicherung in dem verarbeitenden Computersystem von wenigstens der berechneten Intensität, wenn benötigt auch der Farbe des simulierten einfallenden Lichtstrahls. Die Speicherung findet bevorzugt statt im sogenannten Direktzugriffsspeicher, dem RAM (Random Access Memory), kann aber beispielsweise auch in einem sogenannten Flash-Speicher oder auf einer Magnetplatte erfolgen. Lichtstrahlen, die von einem Punkt einer abzubildenden Szene abgestrahlt werden und potenziell zur Abbildung beitragen, fallen durch das Objektiv und werden dabei an den Grenzflächen der Linsen gebrochen, d.h. ihre Richtung wird jeweils entsprechend dem Brechungsgesetz der Optik verändert. Ein Teil dieser Lichtstrahlen fällt auf Teile der Fassung 4 des Objektivs 1 und wird absorbiert und trägt nicht zur Abbildung bei.

Die Absorption von Strahlen an Objektivteilen wird Abschattung genannt und bewirkt die sogenannte Vignettierung. Ein anderer Teil der Lichtstrahlen kann auf die Aperturblende 3 fallen, wird dort absorbiert und trägt nicht zur Abbildung bei. Ein weiterer Teil der Lichtstrahlen fällt durch das Objektiv und trifft auf den Bildaufnehmer 100. Diese Lichtstrahlen tragen zur Abbildung bei.

Das zu simulierende Objektiv 1 kann über ein oder mehrere am Objektiv 1 einstellbare Parameter verfügen. Diese können unter anderem eines oder mehrere der folgenden sein:

- Aperturblende: häufig ist in Objektiven mindestens eine annähernd kreisförmige Blende angebracht, deren optisch durchlässiger Durchmesser durch den Anwender verändert werden kann. Häufig werden sogenannte Irisblenden eingesetzt.
- Zur Fokussierung kann ein Objektiv über ein oder mehrere Linsen, die entlang der optischen Achse relativ zur Bilderfassungsebene und bevorzugt auch relativ zu anderen optischen Elementen verschiebbar sind, verfügen.
- Zur variablen Einstellung der Brennweite kann ein Objektiv über ein oder mehrere Linsen, die entlang der optischen Achse relativ zur Bilderfassungsebene und bevorzugt auch relativ zu anderen optischen Elementen verschiebbar sind, verfügen. Anstelle der Brennweite kann auch die Vergrößerung des Objektivs als kontinuierliche Eingangsvariable verwendet werden. Die Vergrößerung ist ein Skalierungsfaktor der sich aus dem Quotienten aus der Größe eines Bildes eines Objektes auf der Sensor- oder Filmebene und der Größe dieses abgebildeten, fokussierten Objektes ergibt. Es hat sich gezeigt, dass die Wahl der Vergrößerung als Eingangsvariable besonders gut für das erfindungsgemäße Verfahren geeignet ist.
- Zur variablen Einstellung der Bildfeldwölbung kann ein Objektiv über ein oder mehrere Linsen, die entlang der optischen Achse relativ zur Bilderfassungsebene und bevorzugt auch relativ zu anderen optischen Elementen verschiebbar sind, verfügen.
- Zur variablen Manipulation einer Wellenfront des durch das Objektiv fallenden Lichts kann ein Objektiv über verschiebbare Freiformelemente verfügen. Das können beispielsweise eine oder zwei senkrecht zur optischen Achse verschiebbare sogenannte Alvarez-Elemente sein.

Derartige an dem zu simulierenden Objektiv 1 einstellbare Parameter korrespondieren in einer Objektiv-Simulation zu bevorzugt kontinuierlich einstellbaren Eingangsvariablen. Als Ausgangspunkt für das erfindungsgemäße Verfahren dient die bekannte Lehre zur Simulation der optischen Abbildung durch Objektive von Schrade et al. Dort werden die kontinuierlich einstellbaren Eingangsvariablen vor der Berechnung der das Objektiv modellierenden Koeffizienten festgelegt und bestimmen deren Werte. Sollen diese Werte geändert werden, müssen bei diesem Simulationsverfahren die das Objektiv modellierenden Koeffizienten neu berechnet werden.

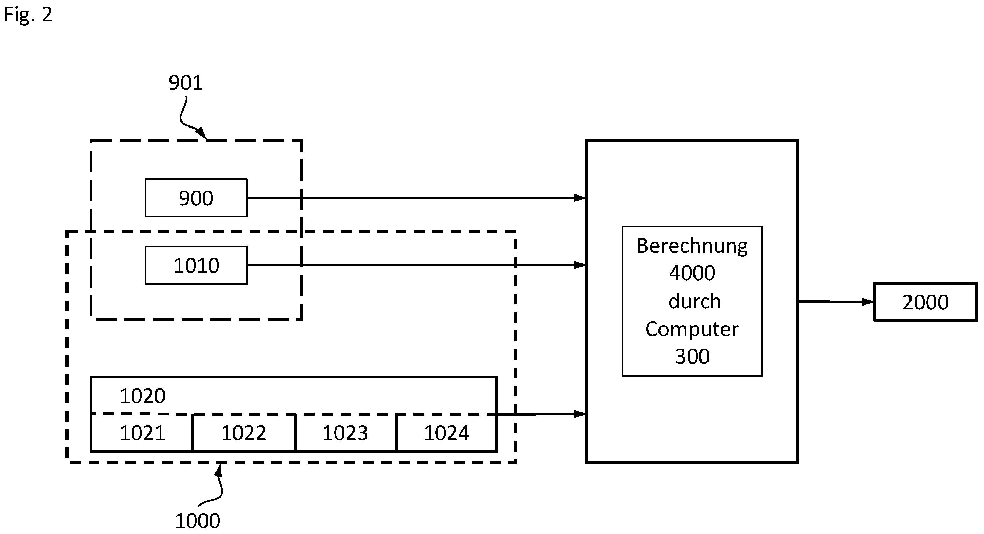

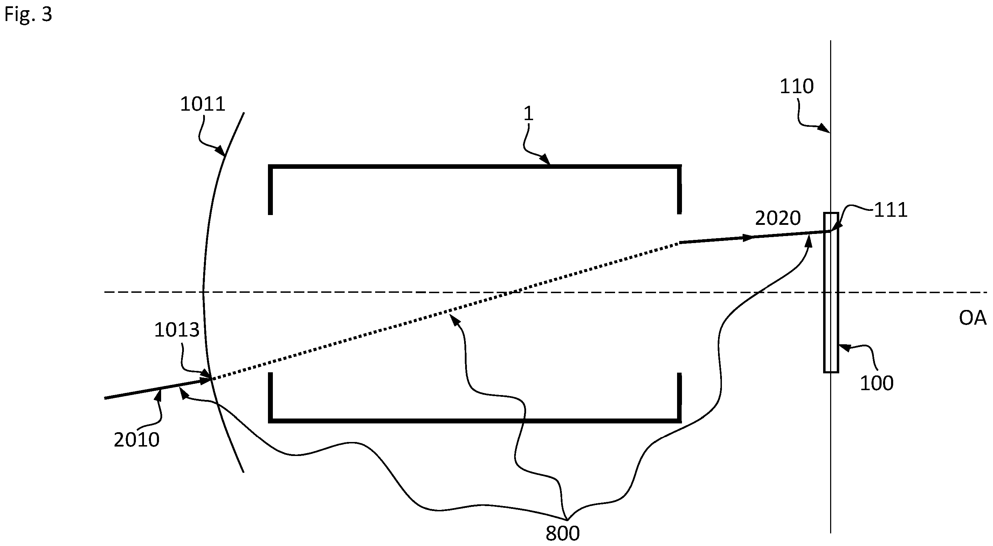

Der erfindungsgemäßen Simulation der optischen Abbildung eines zu simulierenden Objektivs liegt eine Transformationsvorschrift 900 zugrunde. Dies ist schematisch in Figur 2 gezeigt. Diese Transformationsvorschrift 900 verarbeitet in einer von einem Computer 300 ausgeführten Berechnung 4000 Daten von einem oder mehreren Eingangsdatensätzen 1000 und wandelt diese in einen Ausgangsdatensatz 2000 um. Die Transformationsvorschrift 900 kann unter anderem ein Polynom umfassen. Die Transformationsvorschrift 900 kann unter anderem eine Splinefunktion umfassen. Die in Figur 3 gezeigte Wirkung der optischen Abbildung äußert sich dadurch, dass ein simulierter Strahl 800, der vom simulierten Objekt abgestrahlt wird und eine vom simulierten Sensor 100 unterschiedliche Fläche an einer gewissen Position als einfallender Strahl 2010 mit einer gewissen Richtung durchstößt, nach Durchlaufen des Objektivs als ausfallender Strahl 2020 auf einen Punkt des simulierten Sensors 100 in einer bestimmten Richtung auftrifft, wobei diese Richtung in der Regel von der ursprünglichen Strahlrichtung abweicht. Der resultierende Strahlversatz und die resultierende Richtungsänderung des durchlaufenden Lichtstrahl 800 ist die Wirkung des Objektivs 1. Die als einfallender Strahl 2010 und ausfallender Strahl 2020 bezeichneten Strahlen sind Teilstrahlen des das Objektiv durchlaufenden Strahls 800. Ein Teil der benötigten Informationen zur vollständigen Beschreibung des Lichtstrahls 800 können auch Informationen zu Polarisation, einer oder mehrerer Wellenlängen oder Farben, jeweils verbunden mit einer Intensität, sein.

Die von einem Objektiv 1 an einem durchlaufenden Strahl 800 bewirkten Wirkungen können Strahlversatz, Richtungsänderung, Polarisationsänderung, Farbveränderung, Abschwächung der Strahlintensität, Aufspaltung des Strahls in Teilstrahlen oder andere Änderungen sein. Es können auch gleichzeitig mehrere dieser Wirkungen auf einen Strahl 800 auftreten. Eine Aufspaltung in Teilstrahlen kann beispielsweise bewirkt werden durch teilweise Transmission und Reflexion an optisch brechenden Flächen oder an Beschichtungsflächen, durch Aufspaltung in ordentliche und außerordentliche Strahlen in optisch anisotropen Kristallen, oder durch Beugung an diffraktiven Strukturen oder Hologrammen. Alle diese Wirkungen sind erfindungsgemäß erfasste Wirkungen eines Objektivs 1.

Aus praktischen Gründen werden optische Simulationen oft so durchgeführt, dass die Strahlen in entgegengesetzter Richtung, also ausgehend vom Sensor durchgerechnet werden. Die Beschreibung der Erfindung hier folgt diesem Ansatz, es wird aber nochmals explizit darauf hingewiesen, dass erfindungsgemäß auch eine Strahlsimulation in Lichtrichtung erfindungsgemäß erfasst wird.

Der simulierte Sensor 100 befindet sich erfindungsgemäß auf einer ersten Fläche, der Sensorfläche 110. Zu simulierende Lichtstrahlen 800 treffen auf diese Fläche an einem Auftreffpunkt 111 auf.

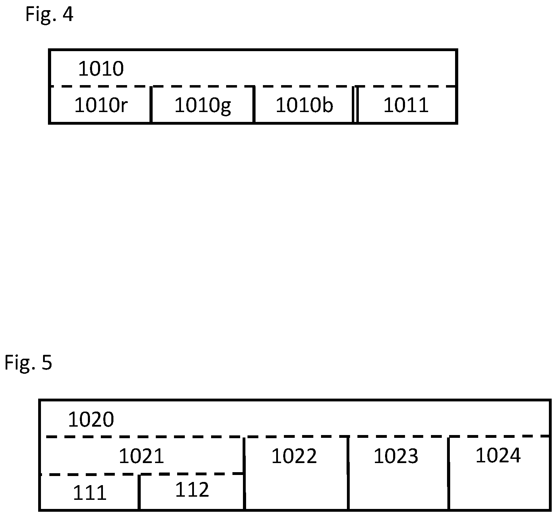

Ein erster Datensatz 1010, der Eingangsdatensatz, enthält erfindungsgemäß unter anderem Daten die geeignet sind, in Zusammenwirken mit der Transformationsvorschrift 900 die Wirkung des simulierten Objektivs auf simulierte Lichtstrahlen 800 zu beschreiben, welche durch das simulierte Objektiv fallen. Dabei sind die Charakteristika des simulierten Objektivs ausschließlich in dem ersten Datensatz 1010 enthalten und nicht in der Transformationsvorschrift 900. Weder der Datensatz 1010 noch die Transformationsvorschrift 900 enthalten dagegen Daten über zu simulierende Lichtstrahlen oder am simulierten Objektiv einstellbare Parameter. Die Transformation 900 und der Datensatz 1010 können zusammen als virtuelles Objektiv 901 bezeichnet werden, denn die Weitergabe nur dieser Informationen reicht aus, dass ein Nutzer mit eigenen Daten Renderings von virtuellen Szenen erstellt. Der erste Datensatz 1010 kann wie in Figur 4 schematisch gezeigt, einen oder mehrere Unterdatensätze 1010r, 1010g, 1010b beinhalten, welche jeweils einer bestimmten Wellenlänge des Lichtes, bzw. einem bestimmten Wellenlängenband zugeordnet sind. Dadurch wird chromatischen Abbildungsfehlern, die in realen Objektiven aus physikalischen Gründen auftreten, Rechnung getragen. Bevorzugt werden drei solche Unterdatensätze 1010r, 1010g, 1010b, nämlich für Rot, Grün und Blau vorgehalten. Es können aber auch mehr oder weniger solche Unterdatensätze Verwendung finden. Farbeffekte können erfindungsgemäß auch durch einen Differenzansatz aus nur einem Datensatz 1010 berechnet werden, insbesondere wenn die Farbfehler klein sind.

Der erste Datensatz 1010 enthält weiterhin erfindungsgemäß Daten, welche Informationen über eine erste Fläche oder virtuelle Eingangsfläche oder virtuelle Frontfläche 1011 umfassen, die von simulierten Strahlen des Abbildungsstrahlengangs oder ihrer Verlängerung an einem ersten Durchstoßpunkt 1013 durchstoßen wird. Bevorzugt ist diese Fläche dem simulierten Sensor vor- oder nachgelagert. Bevorzugt handelt es sich bei dieser ersten Fläche oder virtuellen Frontfläche 1011 um eine rotationssymmetrische Fläche, deren Symmetrieachse der optischen Achse OA des simulierten Objektivs entspricht und die bevorzugt den tatsächlichen Flächen des zu simulierenden Objektivs vorgelagert ist. Dies umfasst insbesondere aber nicht abschließend kugelförmige Flächen und andere durch rotierende Kegelschnitte gebildete Flächen, sowie Ebenen. Die erste Fläche oder virtuelle Frontfläche 1011 kann mit einer Linsenfläche des simulierten Objektivs zusammenfallen, muss dies aber nicht. Bevorzugt fällt die virtuelle Frontfläche 1011 gerade nicht mit einer Linsenfläche des simulierten Objektivs zusammen. Eine andere bevorzugte Position der virtuellen Frontfläche ist die Eintrittspupille des Objektivs. Besonders bevorzugt wird die virtuelle Frontfläche 1011 so platziert, dass sie weiter vom Sensor 100 entfernt ist als die vom Sensor am weitesten entfernt liegende Linsenfläche. Bevorzugt wird die virtuelle Frontfläche so gewählt, dass ihre Position und Form bei Änderung der Brennweite, des Fokus oder anderer einstellbarer Objektivparameter konstant bleibt. Dies verringert die Komplexität der Simulation und erhöht die Vertraulichkeit, da die virtuelle Frontfläche 1011 so keinerlei Information über den realen Aufbau des zu simulierenden Objektivs beinhaltet.

Der Datensatz kann ein Polynom umfassen. Je nach der gewünschten Anpassungsgenauigkeit der Strahlposition oder der Strahlrichtung sowie den Informationen zu abschattenden, Vignettierung erzeugenden Flächen kann das Polynom wenigstens 5, oder wenigstens 10, oder wenigstens 20 oder wenigstens 30 Koeffizienten umfassen. Beispielsweise kann ein dünnbesetztes Polynom mit 20 Koeffizienten von maximalem Grad 6 für Strahlposition und Strahlrichtung, sowie mit 5 Koeffizienten von maximalem Grad 3 für Abschattungsinformationen verwendet werden.

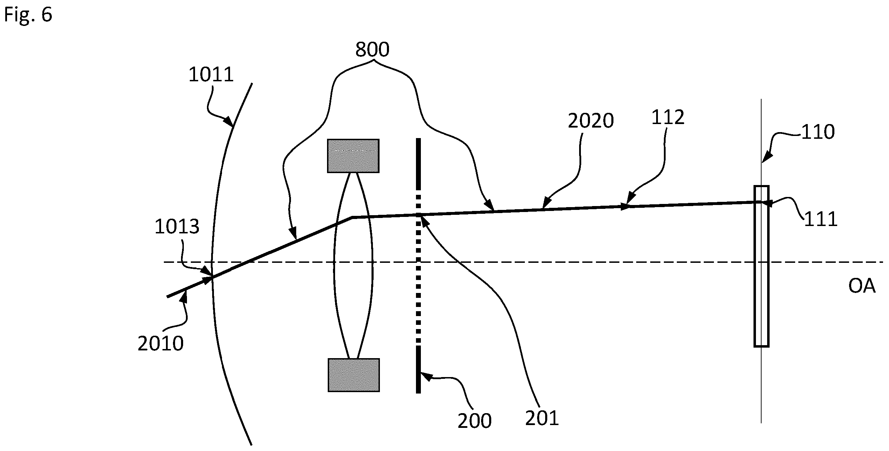

Ein zweiter, in Figur 5 schematisch gezeigter, Datensatz 1020 enthält unter anderem Informationen 1021 über einen simulierten Lichtstrahl 800, bestehend aus Informationen über einen Auftreffpunkt 111 dieses simulierten Lichtstrahls 800 auf die Sensorfläche 110 sowie einer Richtungsinformation 112 dieses Strahls gezeigt. Die Information über den Auftreffpunkt 111 kann gegeben sein durch einen dreidimensionalen Vektor in einem mit dem simulierten Objektiv verbundenen Koordinatensystem, aber auch durch zweidimensionale Parameter, welche die Position auf der Sensorfläche 110 parametrisiert beschreiben, wie in Figur 6 gezeigt. Dies kann beispielsweise, aber nicht abschließend, ein Azimutwinkel und ein Radius oder ein normierter Radius oder ein Elevationswinkel sein. Die Richtungsinformation 112 des simulierten Strahls kann beispielsweise und nicht notwendig abschließend, gegeben sein durch die Angabe eines dreidimensionalen Vektors, aber auch durch Angabe zweier Winkel in Bezug auf ein mit dem simulierten Objektiv verbundenen Koordinatensystem. Eine weitere erfindungsgemäße, besonders bevorzugte Darstellung der Richtung kann auch durch die parametrisierte Angabe eines in Figur 6 gezeigten zweiten Durchstoßpunktes 201 durch eine zweite Fläche 200 bestehen, welcher in Zusammenhang mit dem Auftreffpunkt 111 einen eineindeutigen Zusammenhang zur Richtungsinformation 112 ergibt. Bei der parametrisierten Angabe des zweiten Durchstoßpunktes 201 auf der zweiten Fläche 200 hat sich gezeigt, dass die Angabe eines auf 1 normierten Radius $r_n$ besonders vorteilhaft ist, denn dann besteht die Richtungsinformation 112 lediglich aus einem Winkel zwischen 0 und 360 Grad und einem Radius $r_n$ im Bereich $0 < r_n \leq 1$, und es wird auch keine Angabe der axialen Position der zweiten Fläche 200 mehr benötigt. Zur weiteren Berechnung wird lediglich ein Satz aus zwei Parametern, beispielsweise Winkel und normierter Radius benötigt, während die axiale Position unberücksichtigt bleiben kann. Es hat sich als vorteilhaft erwiesen, für die zweite Fläche 200 die Position einer Aperturblende zu wählen, denn dort werden häufig die meisten Strahlen abgeschattet, insbesondere wenn das Objektiv abgeblendet wird. Bei Simulation des Objektivs bei Offenblende wird dann der maximale normierte Radius $r_n=1$ gewählt, bei Simulation eines abgeblendeten Objektivs ein entsprechend kleinerer Wert für $r_n$. Der zweite Datensatz 1020 kann diese Informationen 1022 über die Abblendung des zu simulierenden Objektivs umfassen. Da aufgrund der Parametrisierung die tatsächliche axiale Position der zweiten Fläche 200 und die tatsächliche Größe der Aperturblende nicht bekannt sind oder zumindest nicht bekannt sein müssen, während die Wirkung der Aperturblende durch geeignete Wahl des Radius $r_n$ nachgebildet wird, kann maximale Vertraulichkeit für die tatsächliche Position der Aperturblende sichergestellt werden.

Neben der bevorzugten Information über den Radius einer annähernd kreisförmigen Blendenöffnung, können auch Daten enthalten sein, die eine Formveränderung der Aperturblende beschreiben. Beispielsweise zeigt die Irisblende eines Carl Zeiss Sonnar 2,8/135 mit C/Y-Mount bei einer eingestellten Blendenzahl von 4 eine ausgeprägte Abweichung von der Rotationssymmetrie. Der durchlässige Bereich der Blende oder Aperturblende wird durch mindestens eine Dimension, beispielsweise einen Radius beschrieben, es können aber noch andere Dimensionen zur Beschreibung komplexerer Formen der Blende verwendet werden.

Der zweite Datensatz 1020 kann weiterhin umfassen Informationen 1023 über einen oder mehrere weitere am Objektiv einstellbare Abbildungsparameter, welche die Abbildung beeinflussen. Erfindungsgemäß umfasst dies beispielsweise, aber nicht abschließend, die Brennweite und/oder die Fokusentfernung des simulierten Objektivs und/oder einen Parameter zur variablen Einstellung der Bildfeldkrümmung. Alternativ zur Brennweite des Objektivs kann auch der Abbildungsmaßstab enthalten sein, bezogen auf den Abbildungsmaßstab von Objekten, die scharf in die Sensorebene abgebildet werden. Weiterhin kann der Datensatz 1020 Informationen umfassen über Strahlablenkungen durch veränderbare Spiegel oder andere optische Elemente, wie diffraktive Elemente, Polarisatoren, optische Filter wie Grauverlaufsfilter, Frequenzfilter, variable Strahlteiler oder Alvarez-Platten oder andere bewegliche Freiformflächen.

Der zweite Datensatz 1020 kann weiterhin umfassen Informationen 1024 über eine oder mehrere Wellenlängen, Wellenlängenbereiche oder Farben der zu simulierenden Lichtstrahlen.

Der zweite Datensatz 1020 enthält somit alle vom Anwender der Simulation gewählten oder bewirkten Größen, wie am simulierten Objektiv einstellbare Parameter und Informationen über zu simulierende Lichtstrahlen 1021, 1024. Der erste Datensatz 1010 enthält dagegen nur die Daten, welche das Abbildungsverhalten des Objektivs für alle denkbaren Kombinationen der einstellbaren Parameter 1022, 1023 beinhaltet. Es versteht sich von selbst, dass bei der Trainings- bzw. Optimierungsphase zur Erstellung des ersten Datensatzes 1010 die gesamte Spannbreite der Parameter 1022, 1023 die zugelassen werden sollen, berücksichtigt wird.

Diese Spannbreite ist üblicherweise durch die Möglichkeiten des realen Vorbilds des zu simulierenden Objektivs vorgegeben.

Zur erfindungsgemäßen Simulation eines gegebenen Objektivs wird zunächst vor der Durchführung der eigentlichen Simulation der erste Datensatz 1010 benötigt, der unter Anwendung der Transformationsvorschrift 900 das Abbildungsverhalten des zu simulierenden Objektivs und die virtuelle Frontfläche 1011 des zu simulierten Objektivs 1 beschreibt. Der Datensatz 1010 kann durch eine Berechnung wie folgt gewonnen werden.

Zunächst wird eine zweite Fläche 200 zwischen der Position des Sensors und der Position der virtuellen Frontfläche gewählt. Der Datensatz 1010 wird unter Berücksichtigung der möglichen einstellbaren Parameter 1022, 1023 und der zweiten Fläche 200 vorberechnet. Dazu werden für ein oder mehrere Wellenlängen oder Wellenlängenbereiche folgende Schritte durchgeführt:

- Für eine Vielzahl von Strahlen und eine Vielzahl von Einstellungen des oder der einstellbaren Parameter wie Fokusentfernung oder Brennweite wird eine Strahldurchrechnung per Ray-Tracing unter Zuhilfenahme des exakten optischen Aufbaus des zu simulierenden Objektivs vorgenommen.

- Berechnung des Datensatzes 1010 durch einen Optimierungsalgorithmus. Dafür können bekannte iterative Optimierungsalgorithmen oder Fit-Algorithmen des Standes der Technik herangezogen werden. Ein besonders geeigneter Algorithmus ist als "Orthogonal Matching Pursuit"-Algorithmus bekannt. Das Ergebnis dieses Fitting- oder Optimierungsprozesses ist der Datensatz 1010, der für einen gegebenen Eingangsstrahl und gegebene einstellbare Objektivparameter unter Berücksichtigung des zweiten Datensatz 1020 Position und Richtung des Ausgangsstrahls liefert.

- Zusätzlich zu diesem Optimierungsprozess können noch ein oder mehrere Stellen im zu simulierenden Objektiv 1 identifiziert werden, an denen Strahlen abgeschattet werden und somit absorbiert werden, weil sie beispielsweise in das Gehäuse des Objektivs oder in eine Blende laufen. Eine besonders ausgezeichnete und bevorzugte Blende oder Abschattungsfläche 210 ist die im Durchmesser und/oder in der Form wählbare Aperturblende 3. Eine derartige Blende ist in vielen Objektiven enthalten. Die Informationen über alle betrachteten Abschattungsflächen 210 werden Teil des Datensatzes, indem mehrere Teildatensätze 1030 gebildet werden. Jeder dieser Teildatensätze 1030 enthält Informationen über die Koeffizienten, die zur teilweisen Simulation des zu simulierenden Objektivs von der Sensorfläche bis zu der jeweiligen Abschattungsfläche 210 geeignet sind. Die tatsächlichen axialen Positionen dieser Abschattungsflächen 210 sind nicht relevant. Eine Strahlposition kann für jede Abschattungsfläche 210 durch einen parametrisierten Ansatz angegeben werden, wobei die Parameter beispielsweise bestehen aus einem Azimutwinkel und einem Radius oder einem Elevationswinkel oder, besonders bevorzugt, einem normierten Radius.

- Der Datensatz 1010 muss zumindest Informationen umfassen über die Koeffizienten, die zur Simulation der Strahlverläufe von der Sensorfläche bis zur virtuellen Frontfläche 1011 oder bis zur Objektivvorderfläche oder bis zur Eintrittspupille des Objektivs 1 geeignet ist.

- Die virtuelle Frontfläche 1011 kann vorab festgelegt werden. Es ist aber auch möglich die virtuelle Frontfläche 1011 als Teil des Optimierungsprozesses für den Datensatz 1010 mit zu optimieren.

Alternativ zur Methode der optimierenden Berechnung kann der Datensatz 1010 auch mit Hilfe von Messungen an wenigstens einer realen Verkörperung des zu simulierenden Objektivs gewonnen werden. Dazu können Musterobjekte mit dem Objektiv abgebildet und die entstehenden Bilder aufgenommen werden. Dies kann für eine Vielzahl von Einstellungen der am Objektiv einstellbaren Parameter wie Fokus und/oder Brennweite/Vergrößerung und/oder Öffnung der Aperturblende vorgenommen werden. Aus den gewonnenen Bildern kann dann rechnerisch auf den benötigten Satz von Koeffizienten, der den Datensatz 1010 bildet, zurückgerechnet werden. Eine weitere messtechnische Möglichkeit der Gewinnung des Datensatzes ist die Durchleuchtung einer realen Verkörperung des zu simulierenden Objektivs mit einem einzelnen Lichtstrahl geeigneter Wellenlänge, beispielsweise einem Laserstrahl. Die Wirkung des Objektivs auf den Strahl kann am anderen Ende des Objektivs messtechnisch erfasst werden. Dies kann für weitere Wellenlängen und unterschiedliche Durchstoßpunkte und Richtungen des Lichtstrahls durchgeführt werden. Aus den so gewonnenen Messwerten kann rechnerisch auf den benötigten Satz von Koeffizienten, der den Datensatz 1010 bildet, zurückgerechnet werden.

Es versteht sich von selbst, dass die rechnerisch und/oder messtechnisch gewonnenen Werte des Datensatzes 1010 noch nachträglich empirisch verändert werden können, um zum Beispiel Fertigungstoleranzen oder Imperfektionen realer Verkörperungen der Objektive nachzubilden.

Zur erfindungsgemäßen Simulation der Abbildung eines gegebenen Objektivs 1 wird ein Computerprogrammprodukt auf einen Computer 300 geladen, welches den Computer 300 in die Lage versetzt, eine Berechnung gemäß der Transformationsvorschrift 900 durchzuführen. Der zuvor vorberechnete erste Datensatz 1010, der Informationen über das zu simulierende Objektiv und die virtuelle Frontfläche 1011 enthält, wird ebenfalls auf den Computer 300 geladen.

Ein Datensatz 1020 wird erzeugt, bestehend aus Informationen 1021 über einen zu simulierenden auf den Sensor fallenden Strahl 2010, sowie aus Informationen über einen oder mehrere am Objektiv einstellbaren Parameter 1022, 1023. Die Informationen 1021 über den zu simulierenden Strahl 2020 umfassen neben der Farbe oder Wellenlänge einen Auftreffpunkt 111 des Strahls auf den Sensor 100 und eine Richtungsinformation 111, die auch aus einer Information über den zweiten Durchstoßpunkt 201 durch eine zweite Fläche 200, die die Aperturblende enthalten kann, gegeben sein kann. Der Auftreffpunkt 111 entspricht bevorzugt der Position eines simulierten Pixels des simulierten Sensors 100. Bevorzugt werden nur solche Strahlen betrachtet, die die zweite Fläche 200 nur innerhalb des gemäß der Information 1022 über die eingestellte Blende durchlässigen Bereichs treffen. Dies kann bei einer kreisförmigen Aperturblende mit normiertem Radius $r_b$ derart realisiert werden, dass nur zu simulierende Strahlen mit Auftreffpunkten mit Radius $r < r_b$ erzeugt und durchgerechnet werden. Bei komplizierteren Geometrien der Aperturblende 3 oder Abschattungsfläche 210 , können Strahlen zwar generiert werden, die die zweite Fläche 200 außerhalb des gemäß der Information 1022 über die eingestellte Blende durchlässigen Bereichs treffen, werden aber verworfen, da nur Strahlen die aus dem durchlässigen Bereich einer Blende kommen, auf den Sensor gelangen können. Das hier für die Aperturblende beschriebene Vorgehen kann analog für alle anderen, möglicherweise im Objektiv vorhandenen Abschattungsflächen 210 durchgeführt werden.

Die Recheneinheit des Computers 300 führt dann zur Simulation eines einzelnen Lichtstrahls 800, der zu der zu simulierenden Abbildung an einem zu wählenden Pixel beiträgt, eine Berechnung gemäß der Transformationsvorschrift 900 mit den Eingangsdatensätzen 1010, 1020 durch, woraus sich ein Ausgangsdatensatz 2000 ergibt, der beinhaltet, welcher einfallende Strahl 2010 durch das simulierte Objektiv in den auf den Sensor fallenden Strahl 2020 des Eingangsdatensatzes 1021 konvertiert wird. Wenn ein oder mehrere abschattende Flächen, beispielsweise eine Aperturblende, im zu simulierenden Objektiv vorhanden sind, so kann die Simulation in mehreren Teilschritten ablaufen, wobei jeweils von der Sensorfläche 110 auf eine der Abschattungsflächen 210 gerechnet wird. Für jede der Abschattungsflächen 210 wird ein eigener Teilschritt gerechnet, wobei die Reihenfolge, in der diese Teilschritte durchlaufen werden, unerheblich ist. Bevorzugt werden Flächen, die viel Abschattung bewirken, vor solchen die wenig Abschattung bewirken, betrachtet. Die Teilschritte können auch parallelisiert ablaufen. Es schließt sich jeweils ein Prüfungsschritt an, ob der Strahl an einem dritten Durchstoßpunkt 211 durch die Abschattungsfläche absorbiert oder transmittiert wird. Absorbierte Strahlen werden verworfen, transmittierte Strahlen werden weiterverfolgt. Eine Durchrechnung erfolgt auch von der Sensorfläche bis auf die virtuelle Frontfläche 1011 oder die Objektivvorderfläche oder die Eintrittspupille. Der dadurch erhaltenen Ausgangsdatensatz 2000 enthält Informationen über den auf die virtuelle Frontfläche 1011 oder die Objektivvorderfläche oder die Eintrittspupille einfallenden Strahl 2010. Diese umfassen den ersten Durchstoßpunkt 1013 des Strahls 2010 durch die virtuelle Frontfläche 1011 sowie eine Richtungsinformation, die beispielsweise beschrieben wird durch einen dreidimensionalen Vektor, oder durch eine parametrisierte Darstellung des Durchstoßpunktes durch eine andere Fläche, oder durch zwei Winkel bezogen auf ein mit dem simulierten Objektiv verbundenen Koordinatensystem.

Zur Berechnung von Farbbildern kann der Simulationsschritt zur Simulation eines einzelnen Lichtstrahls gegebenenfalls mehrfach, bevorzugt dreifach, durchgeführt werden, wobei für jede dieser Durchrechnungen eine andere Wellenlänge oder ein anderes Wellenlängenband des simulierten Lichts angenommen wird und ein anderer Unterdatensatz 1010r, 1010g, 1010b zur Simulation herangezogen werden kann. Für simulierte Objektive mit kleinen Farbfehlern kann auch die Durchrechnung von nur einem Datensatz 1010 ausreichen, wobei für zumindest eine der betrachteten Wellenlängen eine differentielle Korrektur der Ergebnis-Strahlrichtungen und/oder Ergebnis-Strahlpositionen durchgeführt wird. Der Simulationsschritt bestehend aus mehreren Einzelstrahlsimulationen für unterschiedliche Wellenlängen oder bestehend aus einer Einzelstrahlsimulation mit anschließendem differentiellen Korrekturschritt für weitere Farben soll im folgenden als polychromatischer Strahlsimulationsschritt bezeichnet werden.

Anhand des Ausgangsdatensatzes für einen gegebenen Strahl 2020 kann anhand des Modells der abzubildenden Szene auf die Intensität des einfallenden Lichts 2010 geschlossen werden, woraus sich der Intensitätsbeitrag oder gleichbedeutend der Helligkeitsbeitrag dieses simulierten Lichtstrahls zum Signal des betrachteten Pixels in der jeweils betrachteten Wellenlänge oder Farbe ergibt.

Der beschriebene monochromatische oder polychromatische Strahlsimulationsschritt wird für das gleiche Ziel-Pixel für eine Mehrzahl von zu simulierenden Strahlen durchgeführt. Diese werden so gewählt, dass sie von unterschiedlichen Positionen in der zweiten Fläche 200, bevorzugt der Aperturblende 3 ausgehen.

Für jeden dieser simulierten Strahlen wird ein Helligkeitsbeitrag, die Intensität des einfallenden Lichtstrahls 2010 bei gegebener Wellenlänge, aus Informationen über das von den in dieser Richtung beobachtete Objektmerkmal der modellierten Szene kommende Licht bestimmt und alle Helligkeitsbeiträge für einen Bildpunkt aufaddiert. Die Helligkeitsbeiträge von abgeschatteten Strahlen werden verworfen oder auf Null gesetzt, so dass sie keinen Beitrag liefern. Die so gewonnenen Intensitäten oder Helligkeiten der Bildpunkte werden in einem Computerspeicher, bevorzugt in einem Direktzugriffsspeicher, dem RAM (Random Access Memory) oder in einem Flash-Speicher oder auf einer Magnetplatte abgespeichert.

Die beschriebenen Simulationsschritte werden für die weiteren Pixel des Sensors wiederholt, bis ein erstes Bild vollständig aufgebaut ist.

Zur Erzeugung einer Bildsequenz für eine cinematische Bildfolge werden die beschriebenen Schritte für weitere Bilder wiederholt. Dabei kann sich die zu modellierende Szene, die Position der zu simulierenden Kamera und/oder die einstellbaren Objektivparameter wie beispielsweise Fokus und/oder Brennweite und/oder Aperturblende ändern. Solche Änderungen werden insbesondere für besondere cinematische Effekte benötigt, wo beispielsweise durch einen Fokuslauf die Aufmerksamkeit des Betrachters von einem auf ein anderes Objektmerkmal gelenkt wird. Wie beschrieben erfordern derlei Änderungen keinerlei Neuberechnung des Datensatzes 1010. Änderungen in einstellbaren Objektivparametern gehen lediglich in den Datensatz 1020 ein, was einen wesentlichen Geschwindigkeitsvorteil gegenüber Verfahren aus dem Stand der Technik bringt und das Rendering solcher Szenen mit dem erfindungsgemäßen Verfahren besonders effizient macht.

Es kann wie beschrieben noch ein Compositing-Verfahrensschritt angeschlossen werden, bei dem eine Verschmelzung des simulierten Bildes oder der simulierten Bildsequenz mit real aufgenommenen Bildern erfolgt.

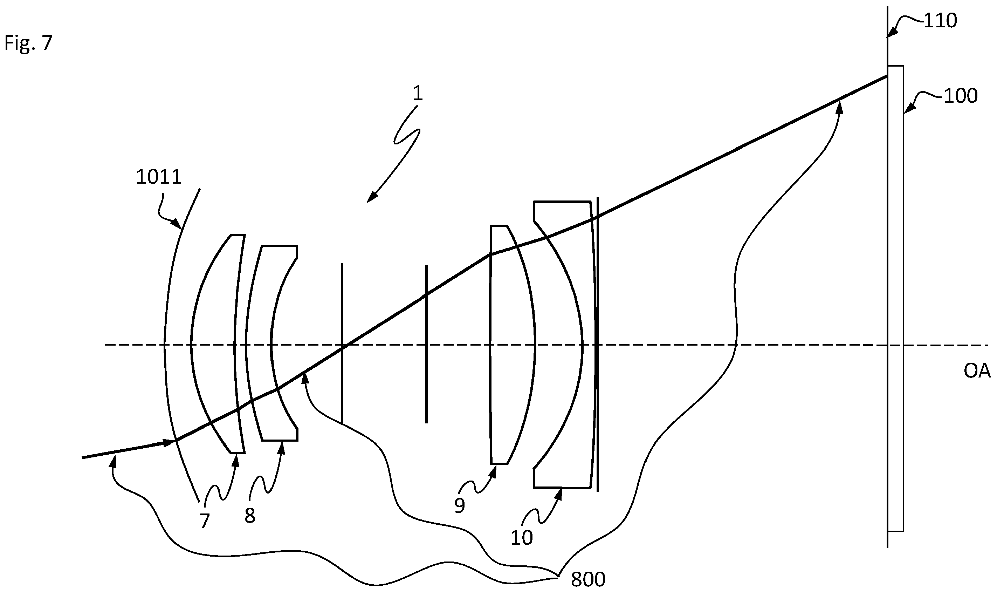

In Figur 7 ist ein schematischer Linsenschnitt eines beispielhaften, zu simulierenden Objektivs dargestellt für eine Fokuseinstellung auf "unendlich". Wie der Darstellung in Figur 7 entnommen werden kann, weist das Objektiv 1 eine erste, eine zweite, eine dritte und eine vierte Linse 7, 8, 9, 10 auf, die in dieser Reihenfolge ausgehend von der Objektseite entlang einer optischen Achse OA des Objektivs 1 hintereinander angeordnet sind. Die erste und dritte Linse 7, 9 weisen jeweils positive Brechkraft und die zweite und vierte Linse 8, 10 weisen jeweils negative Brechkraft auf.

Das erfindungsgemäße Verfahren zur Simulation der Wirkung des Objektivs aus Figur 7 kann somit folgende Schritte umfassen:

Zuerst wird eine virtuelle Frontfläche 1011 festgelegt. Die virtuelle Frontfläche 1011 liegt in einem vordefinierten Abstand vor dem Bildsensor 100 und weist einen vordefinierten und/oder optimierten Krümmungsradius aus. Im Ausführungsbeispiel beträgt der Abstand vom Sensor 60,0 mm und der Krümmungsradius 13,365 mm, es könnten jedoch nach Anwendung und/oder Bedarf auch andere Werte dafür gewählt werden. Im zweiten Schritt wird das Objektivmodell durch eine Trainingsphase erstellt. Dazu wird eine Vielzahl von Trainings- oder Validierungsstrahlen mit jeweils definierter Wellenlänge erzeugt. Dies können pro Wellenlänge und/oder Fokus und/oder betrachtetem Wert eines oder mehrerer anderer veränderbarer Objektivparameter beispielsweise mehr als 5000 Trainingsstrahlen, bevorzugt aber mehr als 10000 Trainingsstrahlen und/oder mehr als 2000 Validierungsstrahlen, bevorzugt aber mehr als 4000 Validierungsstrahlen sein. Im Ausführungsbeispiel die Fokuseinstellungen erzeugt. Im Ausführungsbeispiel wurden 9 annähernd gleichmäßig verteilte Fokuseinstellungen und eine Wellenlänge des simulierten Lichts von 440 nm angenommen.

Im nächsten Schritt werden die abschattenden Flächen identifiziert. Im Ausführungsbeispiel sind dies der Radius der Vorderfläche der ersten Linse 7 von 8,7 mm und eine weitere abschattende Fläche 11 mit dem Radius von 6,0 mm.

Im nächsten Schritt wird mittels eines Optimierungsverfahrens der Parametersatz für das durch die Transformationsvorschrift gegebene abstrakte mathematischen Modell erstellt. Im Ausführungsbeispiel handelt es sich um ein dünnbesetztes Polynom mit 20 Koeffizienten vom maximalem Grad 6 für die Strahlposition und -richtung, sowie mit 5 Koeffizienten von maximalem Grad 3 für die Abschattungsinformationen.

Dieses beispielhafte Modell wird mit dem Verfahren der orthogonalen Anpassung (orthogonal matching pursuit) optimiert und dabei die genannten Koeffizienten berechnet.

Die resultierende Ausgabedaten umfassen wenigstens einen der Werte aus den folgenden Daten: Krümmungsradius der virtuellen Vorderfläche, Entfernung der virtuellen Vorderfläche zum Sensor, minimale Blendenzahl ($F_{min}$), unterstützter Fokusbereich (d), Brennweite (f)

Folgende Metadaten erhält der Nutzer des beispielhaften Objektivmodells:

- Krümmungsradius der virtuellen Frontfläche: 13,365 mm
- Entfernung der virtuellen Frontfläche zum Sensor: 60,0 mm
- Minimale Blendenzahl: $F_{min}$ = 2,87
- Unterstützter Fokusbereich: d = 507 mm bis unendlich
- Brennweite: f = 50,0 mm

Eingangsvariablen des beispielhaften Objektivmodells:

- $x_s$ , $y_s$ : Strahlposition am Sensor, Definitionsbereiche -18,0 mm $\leq x_s \leq$ 18,0 mm und -12 mm $\leq y_s \leq$ 12 mm
- $x_a$ , $y_a$ : Strahlposition in der virtuellen Blende, Definitionsbereich: $x_a^2 + y_a^2 < (F_{min}/F)^2$ bei Blendenzahl F
- $\beta = f / (f - d)$

Ausgangsvariablen des beispielhaften Objektivmodells:

- $x_f$ , $y_f$ : Strahlposition projiziert auf eine Tangentialebene im Scheitel der virtuellen Frontfläche in mm
- $u_f$ , $v_f$ : Strahlrichtung projiziert auf eine Tangentialebene der virtuelle Frontflächen im Strahlpunkt
- $x_{v1}$ , $y_{v1}$ , $x_{v2}$ , $y_{v2}$ : Strahlposition auf abschattenden Flächen. Der Strahl wird abgeschattet, falls $x^2 + y^2 > 1$ an einer der abschattenden, Vignettierung erzeugenden Flächen

Dazu kommen die Fitdaten der parametrisierten Optik des zu simulierenden Objektivs des Ausführungsbeispiels:

Xf

| Koeffizient | Exponent $x_s$ | Exponent $y_s$ | Exponent $x_a$ | Exponent $y_a$ | Exponent $\beta$ | Ordnung |
|---|---|---|---|---|---|---|
| -0,459663284 | 1 | 0 | 0 | 0 | 0 | 1 |
| 8,768720761 | 0 | 0 | 1 | 0 | 0 | 1 |
| -1,304539732 | 1 | 0 | 0 | 0 | 1 | 2 |
| 0,000110631 | 3 | 0 | 0 | 0 | 0 | 3 |
| -0,00496582 | 2 | 0 | 1 | 0 | 0 | 3 |
| 0,000109726 | 1 | 2 | 0 | 0 | 0 | 3 |
| -0,005078146 | 1 | 1 | 0 | 1 | 0 | 3 |
| 0,091802222 | 1 | 0 | 2 | 0 | 0 | 3 |
| 0,067526222 | 1 | 0 | 0 | 2 | 0 | 3 |
| 0,025031505 | 0 | 1 | 1 | 1 | 0 | 3 |
| -0,07933075 | 0 | 0 | 1 | 2 | 0 | 3 |
| 0,000671128 | 3 | 0 | 0 | 0 | 1 | 4 |
| 0,000725495 | 1 | 2 | 0 | 0 | 1 | 4 |
| 1,134.481.527 | 0 | 0 | 3 | 0 | 1 | 4 |
| -5,36E-05 | 2 | 1 | 1 | 1 | 0 | 5 |

(fortgesetzt)

| Koeffizient | Exponent $x_s$ | Exponent $y_s$ | Exponent $x_a$ | Exponent $y_a$ | Exponent $\beta$ | Ordnung |
|---|---|---|---|---|---|---|
| 0,137138593 | 2 | 0 | 1 | 0 | 2 | 5 |
| 0,158010585 | 1 | 1 | 0 | 1 | 2 | 5 |
| -0,784407072 | 1 | 0 | 0 | 2 | 2 | 5 |
| 3,288014989 | 1 | 0 | 0 | 0 | 4 | 5 |
| 0,000741927 | 3 | 0 | 2 | 0 | 1 | 6 |

$u_f$

| Koeffizient | Exponent $x_s$ | Exponent $y_s$ | Exponent $x_a$ | Exponent $y_a$ | Exponent $\beta$ | Ordnung |
|---|---|---|---|---|---|---|
| 0,014551901 | 1 | 0 | 0 | 0 | 0 | 1 |
| -0,666745323 | 0 | 0 | 1 | 0 | 0 | 1 |
| 0,06893195 | 1 | 0 | 0 | 0 | 1 | 2 |
| 0,000145798 | 2 | 0 | 1 | 0 | 0 | 3 |
| 7,79E-06 | 1 | 2 | 0 | 0 | 0 | 3 |
| -0,000358482 | 1 | 1 | 0 | 1 | 0 | 3 |
| -0,00282992 | 1 | 0 | 2 | 0 | 0 | 3 |
| 0,002553763 | 1 | 0 | 0 | 2 | 0 | 3 |
| -0,000240285 | 0 | 2 | 1 | 0 | 0 | 3 |
| 0,013381898 | 0 | 1 | 1 | 1 | 0 | 3 |
| 0,021614836 | 0 | 0 | 3 | 0 | 0 | 3 |
| -0,159397768 | 0 | 0 | 1 | 2 | 0 | 3 |
| -1,127168311 | 0 | 0 | 1 | 0 | 2 | 3 |
| 4,83E-05 | 1 | 2 | 0 | 0 | 1 | 4 |
| -0,002460254 | 1 | 1 | 0 | 1 | 1 | 4 |
| -0,00172234 | 0 | 2 | 1 | 0 | 1 | 4 |
| -7,99E-06 | 1 | 2 | 2 | 0 | 0 | 5 |
| 0,000348182 | 1 | 1 | 2 | 1 | 0 | 5 |
| -0,176833532 | 1 | 0 | 0 | 2 | 2 | 5 |
| -0,47254192 | 0 | 1 | 1 | 1 | 2 | 5 |

$x_{v1}$

| Koeffizient | Exponent $x_s$ | Exponent $y_s$ | Exponent $x_a$ | Exponent $y_a$ | Exponent $\beta$ | Ordnung |
|---|---|---|---|---|---|---|
| -0,027987126 | 1 | 0 | 0 | 0 | 0 | 1 |
| 1,011147804 | 0 | 0 | 1 | 0 | 0 | 1 |
| -0,000368083 | 2 | 0 | 1 | 0 | 0 | 3 |
| -0,000342116 | 1 | 1 | 0 | 1 | 0 | 3 |
| 0,005565995 | 1 | 0 | 0 | 2 | 0 | 3 |

Xv2

| Koeffizient | Exponent $x_s$ | Exponent $y_s$ | Exponent $x_a$ | Exponent $y_a$ | Exponent $\beta$ | Ordnung |
|---|---|---|---|---|---|---|
| 0,031357313 | 1 | 0 | 0 | 0 | 0 | 1 |
| 0,926341281 | 0 | 0 | 1 | 0 | 0 | 1 |
| 0,043996073 | 1 | 0 | 0 | 0 | 1 | 2 |
| -0,257282737 | 0 | 0 | 1 | 0 | 1 | 2 |
| 3,06E-06 | 3 | 0 | 0 | 0 | 0 | 3 |

Die Koeffizienten für $y_f$, $v_f$, $y_{v1}$ und $y_{v2}$ sind nicht dargestellt, da diese aus Symmetriegründen direkt aus denen für $x_f$, $u_f$, $x_{v1}$ bzw. $x_{v2}$ hervorgehen. Dabei ist

$$x_f = \sum_{i,j,k,l,m} c_{ijklm}\, x_s^i\, y_s^j\, x_a^k\, y_a^l\, \beta^m$$

mit dem Koeffizienten c, dem Exponenten i von $x_s$, dem Exponenten j von $y_s$, dem Exponenten k von $x_a$, dem Exponenten l von $y_a$ und dem Exponenten m von $\beta$. Ebenso für $u_f$ in der zweiten Tabelle. Man könnte also auch beschriften Xf

| $c_{ijklm}$ | i | j | k | l | m | Ordnung |
|---|---|---|---|---|---|---|
| -0,459663284 | 1 | 0 | 0 | 0 | 0 | 1 |
| 8,768720761 | 0 | 0 | 1 | 0 | 0 | 1 |
| -1,304539732 | 1 | 0 | 0 | 0 | 1 | 2 |

Es versteht sich, dass zur Berechnung der Intensität oder Helligkeit und der Farbe eines Pixels Informationen über die abzubildende Szene benötigt werden. Liegt die Richtungsinformation über den ersten Durchstoßpunkt 1013 des auf die virtuelle Frontfläche 1011 treffenden zu simulierenden Lichtstrahls vor, so kann rückgerechnet werden, von welchem Punkt des modellierten Objektes das dort einfallende Licht ausgeht. Die Information über die Richtung und den Auftreffpunkt oder ersten Durchstoßpunkt 1013 des simulierten Lichtstrahls erfolgt durch das erfindungsgemäße Simulationsverfahren.

Eine Möglichkeit der Bestimmung des Objektpunktes, von dem ein in das Objektiv einfallender Lichtstrahl 2010 ausgeht, ist konventionelles Ray-Tracing. Dies hat den Vorteil, dass die so gewonnenen Darstellungen physikalisch korrekt und damit photorealistisch sind. Ein Nachteil ist, dass solche Berechnungen sehr aufwändig sind und daher viel Rechenzeit beanspruchen. Es ist wünschenswert ein Verfahren zur Verfügung zu haben, welches erlaubt, deutlich schneller als mit Ray-Tracing zu Informationen zu gelangen, mit welcher Farbe und Intensität oder Helligkeit ein Lichtstrahl beaufschlagt wird, der von einem modellierten Objekt abgeht und auf das simulierte Objektiv 1 oder eine virtuelle Frontfläche 1011 vor dem Objektiv einfällt.

Es ist daher auch Aufgabe der Erfindung ein Verfahren zur Verfügung zu stellen, welches erlaubt, deutlich schneller als mit Ray-Tracing zu physikalisch annähernd korrekten Informationen zu gelangen, mit welcher Farbe und Intensität oder Helligkeit ein Lichtstrahl beaufschlagt wird, der von einem modellierten Objekt abgeht und auf das simulierte Objektiv oder eine virtuelle Frontfläche vor dem Objektiv einfällt.

Diese erfindungsgemäße Aufgabe wird gelöst durch die Merkmale des Anspruchs 1 und die darauf rückbezogenen Unteransprüche.

Es ist dabei wünschenwert, dass dieses erfindungsgemäße Verfahren von den besonderen Eigenschaften der GPUs in Bezug auf Geschwindigkeit und Parallelisierung profitieren kann. Die Kenntnis der Strahlrichtungen, Intensitäten und Farben der auf eine Eintrittsfläche 3000 einfallenden Lichtstrahlen 800 ist äquivalent zur Kenntnis des sogenannten Lichtfeldes an dieser Eingangsfläche. Die Eintrittsfläche 3000 ist so geartet, dass sie beispielsweise die Eintrittspupille, die Vorderfläche der Frontlinse oder die virtuelle Frontfläche 1011 beinhalten kann. Es kann grundsätzlich auch eine andere Fläche gewählt werden, vorausgesetzt die zur Bildentstehung beitragenden Strahlen 800 fallen durch diese Fläche. Es ist vorteilhaft, wenn die Eintrittsfläche 3000 größer als beispielsweise die Eintrittspupille, die Vorderfläche der Frontlinse oder die virtuelle Frontfläche 1011 gewählt wird. Soll eine Simulation der Bildentstehung durch ein Objektiv mit dem erfindungsgemäß beschriebenen Simulationsverfahren durchgeführt werden, so ist es besonders vorteilhaft, die Eintrittsfläche 3000 derart zu wählen, dass sie die Eintrittspupille des zu simulierenden Objektivs oder die Frontfläche des simulierten Objektivs 1 oder die virtuelle Frontfläche 1011 umfasst, denn dann kann das in der Eintrittsfläche 3000 angenäherte Lichtfeld ohne weiteren Transformationsschritt zur Simulation der Bildentstehung verwendet werden.

Ist das Lichtfeld bekannt, so kann mit seiner Hilfe die Bildentstehung durch das zu simulierende Objektiv 1 korrekt modelliert werden. Die Kenntnis des Lichtfeldes oder der für die Abbildung relevanten Teile des Lichtfeldes kann durch Ray-Tracing gewonnen werden. Dies ist jedoch sehr rechenintensiv und daher langsam. Zur Berechnung eines realistischen Bildes ist jedoch nicht unbedingt die vollständige Kenntnis des Lichtfeldes notwendig, sondern es reicht eine hinreichend gute Näherung.

Ein erfindungsgemäßes Verfahren zu solch einer hinreichend guten Näherung zu gelangen ist das nachfolgend beschriebene Verfahren.

Es wird eine Mehrzahl von idealen Bildern an verschiedenen Positionen der Eintrittsfläche 3000 erzeugt. Dies kann durch Berechnung dieser Bilder mittels eines Lochkameramodells für an die jeweiligen Positionen angebrachte Lochkameras geschehen. Zusätzlich zu den idealen Bildern ist auch jeweils die Erstellung einer Tiefenkarte der zu modellierenden Szene nützlich. Die Lochkamerabilder können vorteilhaft so angeordnet sein, dass sie jeweils an der Position verortet sind, an der ein einfallender simulierter Lichtstrahl die Eintrittsfläche 3000 trifft. In diesem Fall kann aus der Kenntnis der Richtung dieses Strahls direkt aus dem Lochkamerabild die Information über die Intensität und Farbe des Lichtstrahles entnommen werden. Dies kann einerseits dadurch erreicht werden, dass an den jeweiligen Positionen Lochkamerabilder erzeugt werden und danach eine Strahldurchrechnung durch das Objektiv von der Position der Lochkamera zu einem bestimmten Pixel durchgeführt wird, oder es wird zunächst eine Strahldurchrechnung an eine bestimmte Position auf der Eintrittsfläche 3000 durchgeführt und danach das entsprechende Lochkamerabild erzeugt.

Zur Erhöhung der Anzahl der zur Verfügung stehenden Lochkamerabilder können durch Interpolation oder Extrapolation aus bestehenden Lochkamerabildern und mindestens einer zugehörigen Tiefenkarte neue Lochkamerabilder berechnet werden. Die Verwendung mindestens einer Tiefenkarte ist dabei notwendig, um die interpolierten Lochkamerabilder perspektivisch korrekt zu erzeugen. Die Erzeugung dieser interpolierten Bilder kann beispielsweise mit einem Verfahren, das als "Screen Space Ray-Tracing" bekannt ist, durchgeführt werden.

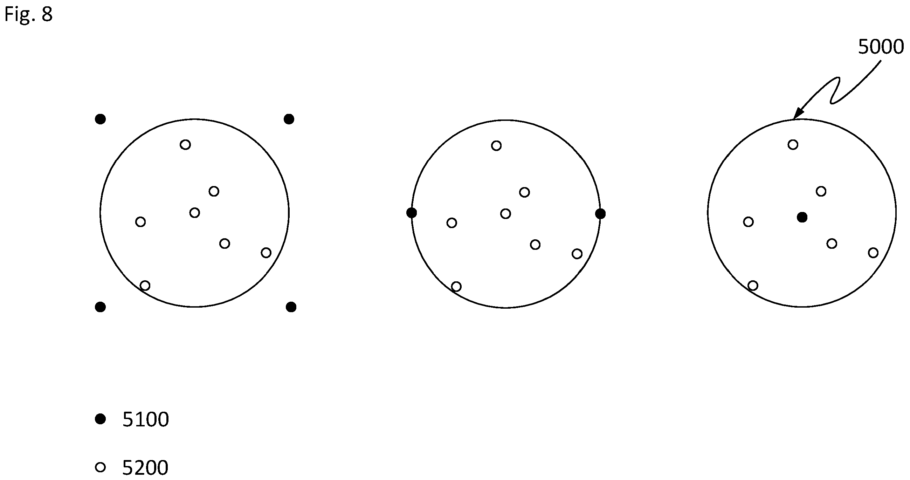

Grundsätzlich ist es möglich, derartige Interpolationen bereits aus einem einzigen Lochkamerabild mit zugehöriger Tiefenkarte zu bestimmen. Bevorzugt sind jedoch mindestens zwei, besonders bevorzugt drei oder mehr Lochkamerabilder. Figur 8 zeigt die Situation beispielhaft für vier, zwei und ein gerendertes Lochkamerabild 5100 und die sich daraus ergebenden interpolierten oder extrapolierten Lochkamerabilder 5200 in Bezug zur Eintrittspupille 5000.

Neue Lochkamerabilder können auch durch Methoden der künstlichen Intelligenz (KI), mit oder ohne vorliegende Tiefenkarte, beispielsweise mit Hilfe eines neuronalen Netzes gewonnen werden.

Die Positionen der Lochkameras können besonders vorteilhaft in einer der folgenden Konstellationen angeordnet sein:

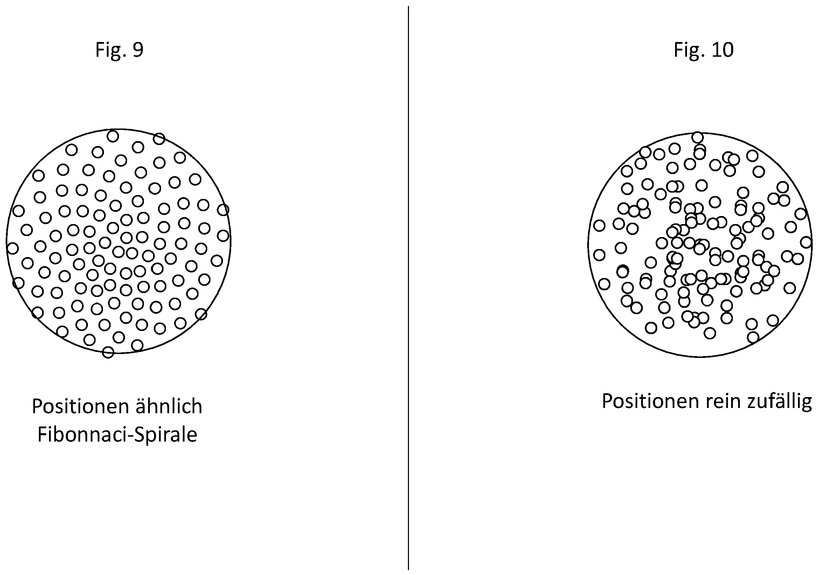

- Festes Spiral-Raster konstanter Dichte, beispielsweise in Form einer sogenannten Fibonacci-Spirale wie in Figur 9 gezeigt. Die Positionen solcher Lochkameras sind bevorzugt innerhalb des durchlässigen Bereichs der Eintrittsfläche 3000 angeordnet.
- Rein zufällige Anordnung, wie in Figur 10 gezeigt.
- Mindestens drei Lochkameras an Positionen außerhalb des durchlässigen Bereichs der Eintrittsfläche 3000, so dass die Eintrittspupille oder die Frontfläche oder die virtuelle Frontfläche 1011 innerhalb des durch die Positionen der Lochkameras beschriebenen Polygons liegen.

Die Positionen der zu verwendenden Lochkamerabilder kann an die zu modellierende Szene angepasst werden, um ausreichend viele Perspektivansichten zur Verfügung zu haben und Artefakte zu vermeiden. Beispielsweise können für den Blick durch ein dünnes Rohr Perspektiven benötigt werden, die in das Rohr hineinsehen und andere Perspektiven, die von außen auf das Rohr blicken.

Selbstverständlich sind erfindungsgemäß auch beliebige andere Anordnungen der Lochkameras umfasst. Feste Positionen mit annähernd konstanter Dichte verbessern die Parallelisierbarkeit des Verfahrens insbesondere auf GPU-gestützen Berechnungssystemen und vermindern Rauschen im Ergebnisbild. Die Qualität des Ergebnisbildes steigt mit der Anzahl der verwendeten idealen Bilder. Dies gilt insbesondere in Regionen mit hoher Unschärfe, denn die Bilder von defokussierten Objektpunkte, die das Bokeh bilden, sind besonders komplex. Es hat sich als vorteilhaft erwiesen, die Dichte der Positionen heuristisch anzupassen, indem Informationen aus der Tiefenkarte herangezogen und mit der zu simulierenden Fokuseinstellung des zu simulierenden Objektivs verglichen werden. Die Position des Lochkamera-Rasters kann auch zufällig gedreht oder gestört werden, was zu einer höheren Bildqualität führen kann. Es ist auch vorteilhaft die Dichte der Lochkameras statisch oder dynamisch an ein heuristisches Qualitätsmaß des resultierenden Bildpunkts anzupassen.

Die Information über das Lichtfeld wird durch eine Interpolation der Informationen aus den einzelnen idealen Bildern gewonnen. Dies kann für jede benötigte Wellenlänge einzeln erfolgen, oder aber auch nur für eine einzelne Wellenlänge exakt, während die Informationen für die anderen benötigten Wellenlängen daraus differentiell angenähert werden.

Die Simulation der Erzeugung des Bildes erfolgt durch Simulation der Beiträge aller Bildpunkte oder Pixel des zu simulierenden Sensors 100. Dazu werden die Lichtbeiträge eines Pixels integriert, indem zunächst für eine Vielzahl von auf dieses Pixel auftreffenden Strahlen mittels Simulation des Objektivs 1 die Einfallsrichtung dieser Strahlen auf die Eintrittsfläche 3000 bestimmt wird. Strahlen, welche im Objektiv 1 abgeschattet werden, werden verworfen. Die Vielzahl der Strahlen kann bevorzugt so gewählt werden, dass die Eintrittsfläche 3000 ausreichend gleichmäßig von den Strahlen durchsetzt wird. Eine andere bevorzugte Vielzahl der Strahlen kann so gewählt werden, dass sie gerade an den Positionen die Eintrittsfläche 3000 schneiden, an denen ideale Bilder vorliegen. Bei der Umrechnung von interpolierten idealen Bildern in Strahlfarbe und Intensität kann die Einrechnung von Gewichtungsfaktoren vorteilhaft sein, da jedem Bildpixel einen unterschiedlich großer Lichtkegel entspricht. Beispielsweise decken Pixel ganz am Rand einen kleineren Winkelbereich ab als solche im Zentrum des Bildaufnehmers.

Erfindungsgemäß wird diese Simulation mit dem beschriebenen, erfindungsgemäßen parametrisierten Verfahren durchgeführt.

Für jeden der simulierten Strahlen wird dann aus der Kenntnis von Strahlrichtung, Position auf der Eintrittsfläche 3000 und der Kenntnis des Lichtfeldes oder des angenäherten Lichtfeldes auf den Helligkeitsbeitrag dieses Strahles am entsprechenden Pixel rückgeschlossen. Dies geschieht durch Auswertung des jeweils zugehörigen Lochkamerabildes. Die Helligkeitsbeiträge aller simulierter Strahlen werden an den jeweils entsprechenden Pixeln aufsummiert, wodurch das Bild der zu modellierenden Szene entsteht.

Die Strahlrichtung bei gegebenem Auftreffpunkt auf dem Bildgeber und auf der Eintrittsfläche 3000 hängt von der Wellenlänge ab. Zur Bestimmung des Helligkeitsbeitrages eines Lichtstrahls aus einem Lichtfeld oder aus einem angenäherten Lichtfeld kann eine separate Rechnung für jede benötigte Wellenlänge oder Farbe durchgeführt werden. Wenn die Richtungsänderungen nur klein sind, kann es ausreichend sein, nur von einer Rechenvorschrift für eine Hauptwellenlänge auszugehen und für andere Wellenlängen nur kleine Änderungen dieser Rechenvorschrift vorzunehmen. Dazu wird zuerst für eine Hauptwellenlänge W1 die Lage im Lichtfeld bestimmt und daraus der Helligkeitsbeitrag oder Intensitätsbeitrag bestimmt. Dann wird für dieselben Auftreffpunkte des simulierten Lichtstrahls am Bildgeber und an der Eintrittsfläche 3000 die verwendete Lage bei W1 als Ausgangspunkt für die Suche der korrekten Lage für die weiteren Wellenlängen verwendet. Dann kann für eine oder mehrere Wellenlängen der Helligkeitsbeitrag oder die Helligkeitsbeiträge berechnet werden. Dies kann beispielsweise durch Interpolation, bevorzugt lineare Interpolation für die ausgewählten Wellenlängen erfolgen. Durch Anwendung dieses Vorgehens für eine Vielzahl von Bildpunkten des Bildgebers kann ein Bild der zu modellierenden Szene inklusiver polychromatischer Aberrationen des Objektivs erhalten werden.

Die Genauigkeit, mit der die Strahlrichtung durch die parametrische Optik bestimmt wird, ist entscheidend für die Qualität des resultierenden simulierten Bildes. Dies ergibt sich aus den Gesetzen der geometrischen Optik, insbesondere aus dem Strahlensatz. Die Richtungsunterschiede des Strahls für verschiedene Wellenlängen oder Farben bei gleichen Auftreffpunkten auf den Bildgeber und auf die Eintrittsfläche 3000 sind in erster Näherung linear. Je nach gewählter parametrischer Darstellung können diese Unterschiede mit einem reduzierten Satz von Parametern bei gleichbleibender Gesamtgenauigkeit gefittet werden, wodurch während der Auswertung der parametrischen Funktion weniger Rechenzeit benötigt wird.

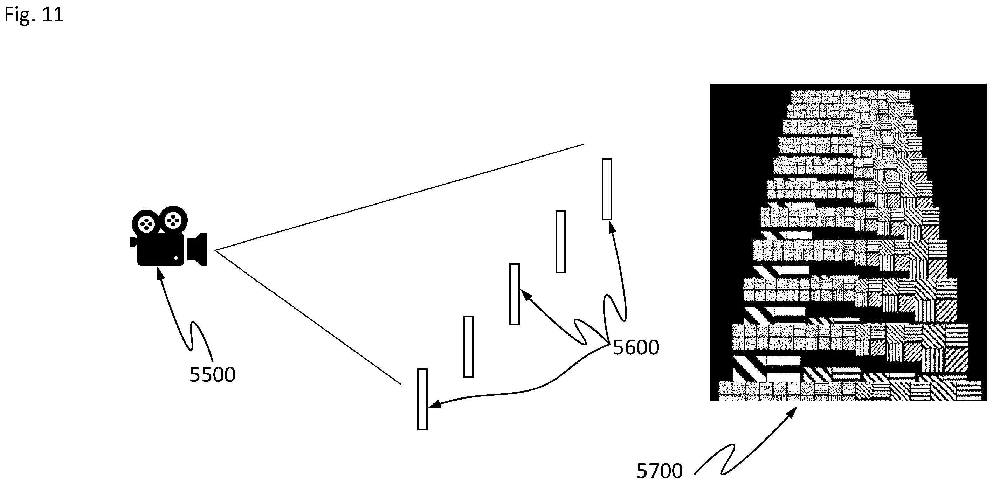

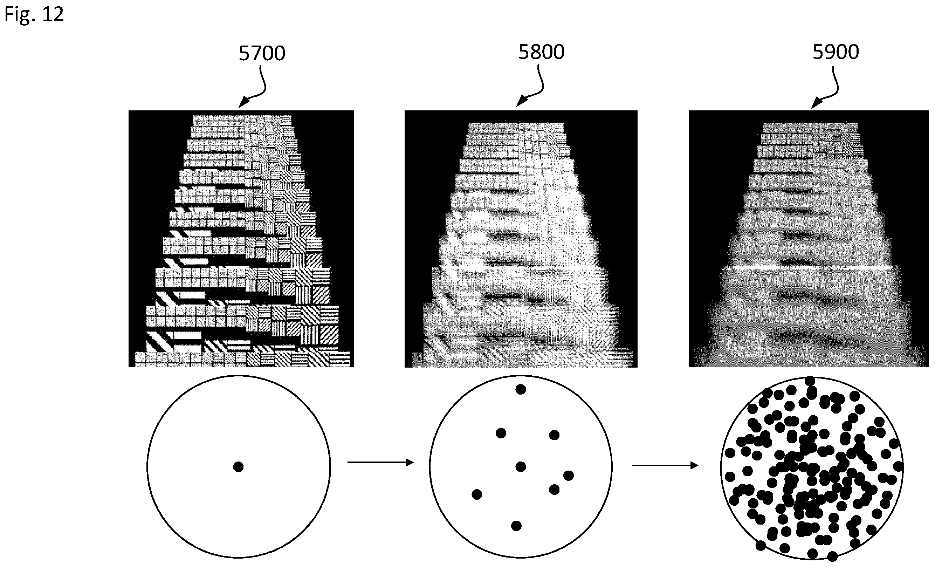

Figur 11 zeigt schematisch beispielhaft den Aufbau einer Bildsimulation anhand eines abstrakten Treppenobjekts und ein zugehöriges Lochkamerabild dieses Treppenobjekts. Simuliert wird die Aufnahme eines treppenförmig angeordneten Satzes von Objekten 5600, welche mit einer Kamera 5500 derart aufgenommen werden, dass die einzelnen Treppenstufen unterschiedliche Entfernung von der Kamera 5500 aufweisen. Eine der Treppenstufen 5500 ist im Fokus der Kamera, während die anderen Treppenstufen außerhalb des Fokus liegen. Ein mit einer beliebig kleinen Aperturblende aufgenommenes Bild des Treppenobjekts 5700 entspricht einem Lochkamerabild, welches unendliche Tiefenschärfe aufweist. Die einzelnen Treppenstufen werden hier alle gleich scharf abgebildet. Figur 12 zeigt einen Vergleich von drei Simulationen mit dem erfindungsgemäßen Verfahren.

Das durch die Simulation entstandene Bild kann durch Compositing mit real aufgenommenen Bildern gemischt werden. Erfindungsgemäß wird das simulierte Bild mit einer Objektiv-Simulation erzeugt, welche das bei einer realen Aufnahme verwendete Objektiv simuliert, wodurch der entstehende Bildeindruck des gemischten Bildes besonders harmonisch ist.

**Bezugszeichenliste**

| | |
|---|---|
| 1 | Objektiv |
| 2 | Linsen |
| 3 | Aperturblende |
| 4 | Fassung |

| | |
|---|---|
| 5 | Pixel |
| 7 | Erste Linse |
| 8 | Zweite Linse |
| 9 | Dritte Linse |
| 10 | Vierte Linse |
| 100 | Bildaufnehmer / Sensor |
| 110 | Sensorfläche |
| 111 | Auftreffpunkt der simulierten Lichtstrahlen auf den Sensor |
| 112 | Richtungsinformation des auf den Sensor auftreffenden Strahls |
| 200 | Zweite Fläche |
| 201 | Zweiter Durchstoßpunkt |
| 210 | Abschattungsfläche |
| 211 | Dritter Durchstoßpunkt |
| 300 | Computer |
| 800 | Simulierter Lichtstrahl |
| 900 | Transformationsvorschrift |
| 901 | Virtuelles Objektiv |
| 1000 | Eingangsdatensätze |
| 1010 | Erster Datensatz ("Virtuelles Objektiv") |
| 1010r, 1010g, 1010b | Unterdatensätze für unterschiedliche Farben |
| 1011 | Virtuelle Frontfläche |
| 1012 | Symmetrieachse |
| 1013 | Erster Durchstoßpunkt |
| 1020 | Zweiter Datensatz |
| 1021 | Informationen über einen simulierenden Lichtstrahl |
| 1022 | Informationen über die eingestellte Blende |
| 1023 | Informationen über weitere am Objektiv einstellbare Abbildungsparameter |
| 1024 | Informationen über die Wellenlänge oder Farbe den zu simulierenden Lichts |
| 1030 | Teildatensätze |
| 2000 | Ausgangsdatensatz |
| 2010 | Einfallender Strahl |
| 2020 | Ausfallender Strahl |
| 3000 | Eintrittsfläche |
| 5000 | Eintrittspupille |
| 5100 | Gerendertes Lochkamerabild |
| 5200 | Interpolierte oder extrapolierte Lochkamerabilder |
| 5500 | Kamera |
| 5600 | Treppenförmig angeordneter Satz von Objekten |
| 5700 | Treppenobjekt mit beliebig kleiner Aperturblende aufgenommen, entspricht einem Lochkamerabild |
| 5800 | Treppenobjekt mit wenigen Lochkamerabildern aufgenommen |
| 5900 | Treppenobjekt mit vielen Lochkamerabildern aufgenommen |

**Patentansprüche**

1. Verfahren zur Erzeugung eines Bildes durch Simulation einer Abbildung einer Szene mit einem optischen Abbildungssystem welches einen auf einer ersten Fläche (110) liegenden Bildaufnehmer (100) und ein Objektiv (1) umfasst,
umfassend folgende Schritte:

   Bereitstellen eines ersten Datensatzes (1010), der Daten umfasst, welche die Wirkung des zu simulierenden Objektivs (1) auf Lichtstrahlen (800) beschreiben, über eine zweite Fläche (200) und über eine virtuelle Frontfläche (1011),
   Bereitstellen einer Transformationsvorschrift (900),
   Auswählen einer Vielzahl von Bildpunkten auf dem Bildaufnehmer (100),
   Berechnung jeweils eines Helligkeitsbeitrages für auf jeden der Bildpunkte einfallende Lichtstrahlen (800) umfassend folgende Schritte:

- Auswählen eines Auftreffpunkts (111) für Lichtstrahlen (800) auf dem Bildaufnehmer (100),
- Auswählen einer Vielzahl unterschiedlicher zweiter Durchstoßpunkte (201) für Lichtstrahlen (800) auf der zweiten Fläche (200),
- Durchführung der folgenden Schritte für jeden der zweiten Durchstoßpunkte (201):

Bereitstellen eines zweiten Datensatzes (1020), der Daten umfasst über den Auftreffpunkt (111) und über den jeweiligen zweiten Durchstoßpunkt (201), Berechnung eines ersten Durchstoßpunktes (1013) des Lichtstrahls (800) durch die virtuelle Frontfläche (1011) sowie einer Richtung des Lichtstrahls (800) an dem ersten Durchstoßpunkt (1013), durch eine Anwendung der Transformationsvorschrift (900) auf den ersten Datensatz (1010) und den zweiten Datensatz (1020),
Bestimmung des Helligkeitsbeitrages des Lichtstrahls (800),
Abspeichern einer Information zum Helligkeitsbeitrag des Lichtstrahls (800), Aufsummation der sich ergebenden Helligkeitsbeiträge und

Abspeichern des Ergebnisses der Aufsummation,
**dadurch gekennzeichnet, dass**
der Helligkeitsbeitrag eines jeden der dafür simulierten Lichtstrahlen (800), der die virtuelle Frontfläche (1011) an dem ersten Durchstoßpunkt (1013) durchstößt, mit Hilfe jeweils eines Lochkamerabildes bestimmt wird,
wobei das Bild so geartet ist, dass es dem erzeugten Bild einer am jeweiligen ersten Durchstoßpunkt (1013) platzierten Lochkamera entspricht.

2. Verfahren gemäß Anspruch 1,
**dadurch gekennzeichnet, dass**

- das Objektiv (1) mindestens einen einstellbaren Abbildungsparameter (1022, 1023) aufweist und
- der zweite Datensatz (1020) Informationen über den mindestens einen einstellbaren Abbildungsparameter (1022, 1023) des Objektivs (1) enthält.

3. Verfahren nach Anspruch 2,
**dadurch gekennzeichnet, dass**
der einstellbare Abbildungsparameter (1023) die Fokussierung und/oder die Brennweite und/oder die Vergrößerung und/oder die Bildfeldwölbung des Objektivs (1) umfasst.

4. Verfahren nach einem der Ansprüche 1 bis 3,
**dadurch gekennzeichnet, dass**
das Objektiv (1) eine Blende, bevorzugt eine Aperturblende (3) umfasst, und die zweite Fläche (200) mit der Blende, bevorzugt der Aperturblende (3) zusammenfällt.

5. Verfahren nach Anspruch 4,
**dadurch gekennzeichnet, dass**
einer der einstellbaren Abbildungsparameter (1022) mindestens eine der Dimensionen der Aperturblende (3) beschreibt.

6. Verfahren nach Anspruch 5,
**dadurch gekennzeichnet, dass**
die Aperturblende (3) zumindest annähernd kreisförmig ist und die Informationen zum zweiten Durchstoßpunkt (201) des Lichtstrahls (800) durch die zweite Fläche (200) einen normierten Radius beinhaltet.

7. Verfahren nach einem der Ansprüche 1 bis 6,
**dadurch gekennzeichnet, dass**

der erste Datensatz (1010) Daten umfasst

- zu mindestens einer Abschattungsfläche (210) im Objektiv (1) und
- zur Wirkung eines Teils des Objektivs (1) auf mindestens einen Lichtstrahl (800), der zwischen mindestens einer Abschattungsfläche (210) und dem Bildaufnehmer (100) verläuft,

und folgende Schritte vor dem Abspeichern des Helligkeitsanteils des mindestens einen Lichtstrahls (800) umfasst:

- Berechnung eines dritten Durchstoßpunktes (211) durch die mindestens eine Abschattungsfläche (210),
- Prüfung, ob der mindestens eine Lichtstrahl (800) an dem dritten Durchstoßpunkt (211) absorbiert oder transmittiert wird,
- Verwerfen des Lichtstrahls (800) oder Setzen des Helligkeitsanteils auf Null, wenn der mindestens eine Lichtstrahl (800) absorbiert wird.

8. Verfahren nach einem der Ansprüche 1 bis 7,
**dadurch gekennzeichnet, dass**
die virtuelle Frontfläche (1011) und die Eintrittspupille des zu simulierenden Objektivs zusammenfallen.

9. Verfahren nach Anspruch 8,
**dadurch gekennzeichnet, dass**
die zweite Fläche (200) mit der virtuellen Frontfläche zusammenfällt.

10. Verfahren nach einem der Ansprüche 1 bis 9,
**dadurch gekennzeichnet, dass**
zumindest eines der Lochkamerabilder durch Interpolation oder Extrapolation aus anderen Lochkamerabildern berechnet wurde.

11. Verfahren zum Erzeugen eines Bildes mit folgenden Schritten,

- Bereitstellen eines von einer realen Kamera aufgenommenen realen Bildes,
- Erzeugen eines virtuellen Bildes gemäß einem der Ansprüche 1 bis 10,
- Verschmelzung oder Überlagerung mindestens eines Teils des realen Bildes und mindestens eines Teils des virtuellen Bildes,
- Abspeichern des entstandenen Bildes,

wobei die für die Simulation verwendeten einstellbaren Objektivparameter zumindest annähernd denen entsprechen, welche bei der realen Aufnahme verwendet wurden.

12. Verfahren zur Erzeugung einer Bildsequenz bestehend aus Einzelbildern mit folgenden Schritten,

- Bereitstellen einer virtuellen Szene
- Bereitstellen einer Kameraposition in Relation zur virtuellen Szene,
- Berechnung der Einzelbilder der Bildsequenz gemäß einem der Verfahren nach Ansprüchen 1 bis 11,
- Abspeichern der Bildsequenz.

13. Computerprogrammprodukt, welches geeignet ist, nach dem Laden auf einen Computer, ein Verfahren gemäß einem der Ansprüche 1 bis 12 durchzuführen.

**Claims**

1. Method for generating an image by simulating an image representation of a scene using an optical imaging system which comprises an image recorder (100) located on a first surface (110) and a lens (1), comprising the following steps:

providing a first data record (1010) comprising data, which describe the effect on light rays (800) of the lens (1) to be simulated, about a second surface (200) and about a virtual front surface (1011),
providing a transformation rule (900),
selecting a multiplicity of picture elements on the image recorder (100),
calculating a respective brightness contribution for light rays (800) incident on each of the picture elements, comprising the following steps:

- selecting a point of incidence (111) for light rays (800) on the image recorder (100),
- selecting a multiplicity of different second points of intersection (201) for light rays (800) on the second surface (200),
- carrying out the following steps for each of the second points of intersection (201):

providing a second data record (1020) comprising data about the point of incidence (111) and about the respective second point of intersection (201),
calculating a first point of intersection (1013) of the light ray (800) with the virtual front surface (1011) and the direction of the light ray (800) at the first point of intersection (1013) by way of applying the transformation rule (900) to the first data record (1010) and the second data record (1020),
determining the brightness contribution of the light ray (800),
storing an information item regarding the brightness contribution of the light ray (800),
summing the brightness contributions arising, and
storing the result of the summation,
**characterized in that**
the brightness contribution of each of the light rays (800) simulated to this end, which intersect the virtual front surface (1011) at the first point of intersection (1013), is determined with the aid of a pinhole camera image in each case,
the nature of the image being such that it corresponds to the image generated by a pinhole camera placed at the respective first point of intersection (1013).

2. Method according to Claim 1,
**characterized in that**

- the lens (1) has at least one adjustable imaging parameter (1022, 1023) and
- the second data record (1020) contains information items about the at least one adjustable imaging parameter (1022, 1023) of the lens (1).

3. Method according to Claim 2,
**characterized in that**
the adjustable imaging parameter (1023) comprises the focus setting and/or the focal length and/or the magnification and/or the field curvature of the lens (1).

4. Method according to any of Claims 1 to 3,
**characterized in that**
the lens (1) comprises a stop, preferably an aperture stop (3), and the second surface (200) coincides with the stop, preferably the aperture stop (3).

5. Method according to Claim 4,
**characterized in that**
one of the adjustable imaging parameters (1022) describes at least one of the dimensions of the aperture stop (3).

6. Method according to Claim 5,
**characterized in that**
the aperture stop (3) is at least approximately circular and the information items relating to the second point of intersection (201) of the light ray (800) with the second surface (200) contain a normalized radius.

7. Method according to any of Claims 1 to 6,
**characterized in that**

the first data record (1010) comprises data

- in relation to at least one shading area (210) in the lens (1) and
- in relation to the effect of a part of the lens (1) on at least one light ray (800), which extends between at least one shading area (210) and the image recorder (100),

and comprises the following steps before storing the brightness component of the at least one light ray (800):

- calculating a third point of intersection (211) with the at least one shading area (210),
- checking whether the at least one light ray (800) is absorbed by or transmitted through the third point of intersection (211),
- discarding the light ray (800) or setting the brightness component to zero if the at least one light ray (800) is absorbed.

8.  Method according to any of Claims 1 to 7,
    **characterized in that**
    the virtual front surface (1011) and the entrance pupil of the lens to be simulated coincide.

9.  Method according to Claim 8,
    **characterized in that**
    the second surface (200) coincides with the virtual front surface.

10. Method according to any of Claims 1 to 9,
    **characterized in that**
    at least one of the pinhole camera images was calculated by interpolation or extrapolation from other pinhole camera images.

11. Method for generating an image, comprising the following steps:

    - providing a real image recorded by a real camera,
    - generating a virtual image according to any of Claims 1 to 10,
    - fusing or overlaying at least a portion of the real image and at least a portion of the virtual image,
    - storing the image created,

    wherein the adjustable lens parameters used for the simulation correspond at least approximately to those used during the real recording.

12. Method for generating an image sequence consisting of individual images, comprising the following steps:

    - providing a virtual scene,
    - providing a camera position in relation to the virtual scene,
    - calculating the individual images of the image sequence in accordance with one of the methods according to Claims 1 to 11,
    - storing the image sequence.

13. Computer program product suitable for carrying out a method according to any of Claims 1 to 12 after being loaded onto a computer.


**Revendications**

1.  Procédé de génération d'une image par simulation d'une image d'une scène à l'aide d'un système d'imagerie optique qui comprend un dispositif de prise de vues (100) reposant sur une première surface (110), et un objectif (1), comprenant les étapes suivantes :

    la fourniture d'un premier ensemble de données (1010) comprenant des données qui décrivent l'effet de l'objectif (1) à simuler sur des faisceaux lumineux (800) via une deuxième surface (200) et via une surface avant virtuelle (1011),
    la fourniture d'une instruction de transformation (900), la sélection d'une multiplicité de points d'image sur le dispositif de prise de vues (100),
    le calcul respectif d'une contribution à la luminosité pour des faisceaux lumineux (800) incidents sur chacun des points d'image, comprenant les étapes suivantes :

    - la sélection d'un point d'incidence (111) pour les faisceaux lumineux (800) sur le dispositif de prise de vues (100),
    - la sélection d'une multiplicité de deuxièmes points de pénétration (201) différents pour des faisceaux lumineux (800) sur la deuxième surface (200),
    - l'exécution des étapes suivantes pour chacun des deuxièmes points de pénétration (201) :

la fourniture d'un deuxième ensemble de données (1020) comprenant des données concernant le point d'incidence (111) et le deuxième point de pénétration respectif (201),

le calcul d'un premier point de pénétration (1013) du faisceau lumineux (800) à travers la surface avant virtuelle (1011) et d'une direction du faisceau lumineux (800) au niveau du premier point de pénétration (1013) par application de la règle de transformation (900) au premier ensemble de données (1010) et au deuxième ensemble de données (1020),

la détermination de la contribution à la luminosité du faisceau lumineux (800),

le stockage d'informations concernant la contribution à la luminosité du faisceau lumineux (800),

la sommation des contributions à la luminosité et

le stockage du résultat de la sommation,

**caractérisé en ce que**

la contribution à la luminosité de chacun des faisceaux lumineux (800), simulés à cet effet, qui pénètrent dans la surface avant virtuelle (1011) au niveau du premier point de pénétration (1013), est respectivement déterminée à l'aide d'une image par caméra d'un trou d'épingle,

l'image étant configurée de telle sorte qu'elle corresponde à l'image générée par caméra d'un trou d'épingle placé au niveau du premier point de pénétration respectif (1013).

2. Procédé selon la revendication 1,
   **caractérisé en ce que**

   - l'objectif (1) présente au moins un paramètre d'imagerie réglable (1022, 1023) et
   - le deuxième ensemble de données (1020) contient des informations concernant au moins un paramètre d'imagerie réglable (1022, 1023) de l'objectif (1).

3. Procédé selon la revendication 2,
   **caractérisé en ce que**
   le paramètre d'imagerie réglable (1023) comprend la mise au point et/ou la distance focale et/ou le grossissement et/ou la courbure du champ d'image de l'objectif (1).

4. Procédé selon l'une des revendications 1 à 3,
   **caractérisé en ce que**
   l'objectif (1) comprend un diaphragme, de préférence un diaphragme d'ouverture (3), et la deuxième surface (200) coïncide avec le diaphragme, de préférence le diaphragme d'ouverture (3).

5. Procédé selon la revendication 4,
   **caractérisé en ce que**
   l'un des paramètres d'imagerie réglables (1022) décrit au moins l'une des dimensions du diaphragme d'ouverture (3).

6. Procédé selon la revendication 5,
   **caractérisé en ce que**
   le diaphragme d'ouverture (3) est au moins approximativement circulaire et les informations concernant le deuxième point de pénétration (201) du faisceau lumineux (800) à travers la deuxième surface (200) contiennent un rayon normé.

7. Procédé selon l'une des revendications 1 à 6,
   **caractérisé en ce que**

   le premier ensemble de données (1010) comprend des données

   - destinées à au moins une surface d'ombrage (210) dans l'objectif (1) et
   - destinées à faire agir une partie de l'objectif (1) sur au moins un faisceau lumineux (800) qui se propage entre au moins une surface d'ombrage (210) et le dispositif de prise de vues (100),

   et comprend les étapes suivantes avant le stockage de la fraction de luminosité dudit au moins un faisceau lumineux (800) :

   - le calcul d'un troisième point de pénétration (211) à travers ladite au moins une surface d'ombrage (210),
   - le fait de vérifier si le faisceau lumineux (800) est absorbé ou transmis au niveau du troisième point de pénétration (211),
- l'élimination du faisceau lumineux (800) ou le réglage de la fraction de luminosité à zéro lorsque ledit au moins un faisceau lumineux (800) est absorbé.

8. Procédé selon l'une des revendications 1 à 7,
**caractérisé en ce que**
la surface avant virtuelle (1011) et la pupille d'entrée de l'objectif à simuler coïncident.

9. Procédé selon la revendication 8,
**caractérisé en ce que**
la deuxième surface (200) coïncide avec la surface frontale virtuelle.

10. Procédé selon l'une des revendications 1 à 9,
**caractérisé en ce que**
au moins l'une des images par caméra d'un trou d'épingle a été calculée par interpolation ou extrapolation à partir d'autres images par caméra d'un trou d'épingle.

11. Procédé de génération d'une image, comprenant les étapes suivantes

- la fourniture d'une image réelle prise par une caméra réelle,
- la génération d'une image virtuelle conformément à l'une des revendications 1 à 10,
- la fusion ou la superposition d'au moins une partie de l'image réelle et d'au moins une partie de l'image virtuelle,
- le stockage de l'image qui en résulte,

les paramètres d'objectif réglables utilisés pour la simulation correspondant au moins approximativement à ceux utilisés dans la prise de vue réelle.

12. Procédé de génération d'une séquence d'images constituée d'images individuelles, comprenant les étapes suivantes :

- la fourniture d'une scène virtuelle
- la fourniture d'une position de caméra par rapport à la scène virtuelle,
- le calcul des images individuelles de la séquence d'images conformément à l'un des procédés selon les revendications 1 à 11,
- le stockage de la séquence d'images.

13. Produit de programme d'ordinateur qui convient, après avoir été chargé sur un ordinateur, pour la mise en œuvre d'un procédé selon l'une des revendications 1 à 12.

Fig. 1
(Stand der Technik)

Fig. 2

Fig. 3

Fig. 4

| 1010 | | | |
|------|------|-------|------|
| 1010r | 1010g | 1010b | 1011 |

EP 4 040 396 B1

Fig. 5

| 1020 | | | | |
|------|------|------|------|------|
| 1021 | | 1022 | 1023 | 1024 |
| 111 | 112 | | | |

Fig. 6

EP 4 040 396 B1

Fig. 7

EP 4 040 396 B1

Fig. 8

Fig. 9

Positionen ähnlich
Fibonnaci-Spirale

Fig. 10

Positionen rein zufällig

Fig. 11

Fig. 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 1786916 A

- DD 263604 A1

**In der Beschreibung aufgeführte Nicht-Patentliteratur**

- **SCHRADE ; E. SCHRADE ; J. HANIKA ; C. DACHSBACHER et al.** Sparse high-degree polynomials for wide-angle lenses. *Eurographics Symposium on Rendering*, 2016, vol. 35 (4)